# EUROPEAN PATENT APPLICATION

(11) **EP 4 428 731 A1**
(43) Date of publication of application: **11.09.2024**
(21) Application number: 22900457.7
(22) Date of filing: 29.11.2022
(51) Int. Cl.: G06F 21/57, G06F 12/1009

(54) **KERNEL PROTECTING METHOD, APPARATUS AND SYSTEM**

(30) Priority: 30.11.2021 CN 202111461175
(71) Applicant: Huawei Technologies Co., Ltd., Shenzhen, Guangdong 518129 (CN)
(72) Inventor: HUANG, Zhenqiang, Shenzhen, Guangdong 518129 (CN); MANEA, Valentin, Shenzhen, Guangdong 518129 (CN); ZHU, Jianwei, Shenzhen, Guangdong 518129 (CN)
(74) Representative: Isarpatent
(86) International application number: PCT/CN2022/135001
(87) International publication number: WO 2023/098653

(57) **Abstract**

A kernel protection method and apparatus, and systems are provided, which relate to the field of security technologies, so that a probability that a kernel is attacked is reduced, and system security is improved. The method is applied to an electronic device. The method includes: working in a first privilege, and detecting a page table modification command, where the first privilege includes the first privilege, the page table modification command is used to modify access permission data in a target page table, the target page table is a kernel-related page table, and the first privilege is a kernel privilege; switching from the first privilege to a second privilege, and determining, under the second privilege, whether to modify the target page table based on the page table modification command, where a permission of the second privilege is higher than that of the first privilege; and modifying the access permission data in the target page table if determining to modify the target page table.

## Description

This application claims priority to Chinese Patent Application No. 202111461175.9, filed with the China National Intellectual Property Administration on November 30, 2021 and entitled "KERNEL PROTECTION METHOD AND APPARATUS, AND SYSTEM", which is incorporated herein by reference in its entirety.

### TECHNICAL FIELD

This application relates to the field of security technologies, and in particular, to a kernel protection method and apparatus, and systems.

### BACKGROUND

A large quantity of application programs on a server run with a normal permission in user space. When network communication or hardware resource access is performed, a permission escalation to kernel space with a higher permission (a kernel privilege) needs to be performed. Therefore, security of a server kernel is critical to normal running of the entire server.

Currently, a system trusts an application provided that the application obtains a kernel privilege. Consequently, an attacker may tamper with the application to attack and steal information, and a risk is high. Therefore, a solution for protecting a kernel from intrusion needs to be urgently proposed.

### SUMMARY

This application provides a kernel protection method and apparatus, and systems, so that a probability that a kernel is attacked is reduced, and system security is improved.

To achieve the foregoing objectives, embodiments of this application provide the following technical solutions:

A first aspect provides a kernel protection method, applied to an electronic device. The method includes:
working in a first privilege, and detecting a page table modification command, where the first privilege includes the first privilege, the page table modification command is used to modify access permission data in a target page table, the target page table is a kernel-related page table, and the first privilege is a kernel privilege;
switching from the first privilege to a second privilege, and determining, under the second privilege, whether to modify the target page table based on the page table modification command, where a permission of the second privilege is higher than that of the first privilege; and
modifying the access permission data in the target page table if determining to modify the target page table.

Optionally, the first privilege is the kernel privilege.

According to the technical solutions in embodiments of this application, an access permission of critical memory in a kernel cannot be directly modified under the kernel privilege. If a permission of the critical memory needs to be modified, the permission needs to be switched to a higher privilege (for example, the second privilege) to complete a modification. Therefore, a probability of being attacked under the kernel privilege can be reduced.

Permission of the critical memory: A page table has many permissions, for example, read, write, and execute permissions that are important. Permissions corresponding to different page tables play different roles in preventing the kernel from intrusion. The permission of the critical memory in this patent is a page table permission that prevents a kernel vulnerability from being exploited, including a write permission of a kernel code segment and a driver code segment, a write permission of a rop-pool page table, and an execute permission of a data segment.

In a possible design, the kernel-related page table includes any one or more of the following page tables: a page table used for mapping the kernel code segment, a page table used for mapping the driver code segment, and a page table used for mapping the data segment; and
the determining whether to modify the target page table based on the page table modification command includes:
if the target page table is the page table used for mapping the kernel code segment, and the page table modification command is a preset command, determining to modify the target page table.

For example, the preset command includes but is not limited to insn. The preset command may further include a command used to modify a page table attribute of the kernel code segment.

In a possible design, the method further includes: creating first physical memory, a first page table, and a second page table under the first privilege, where
the first page table and the second page table are stored in the first physical memory, the first page table is a page table used for mapping the first physical memory, and the second page table is a kernel-related page table.

In a possible design, an access permission of the first physical memory is read-only under the first privilege.

In a possible design, the first page table does not include the write permission under the first privilege, and the first page table includes the write permission under the second privilege.

In a possible design, the preset command includes the insn command.

Some technical terms used in embodiments of this application are briefly described as follows:

Important page table: is a page table that can affect kernel running logic, for example, the page table for mapping the kernel code segment, a page table for mapping a code segment of each driver module, a page table for mapping rop-pool physical memory in this patent, and a partial data segment page table. In a chip architecture with a page table permission priority, the partial data segment page table refers to a high-level page table for mapping a data segment. In another chip architecture, the partial data segment page table refers to a page table for mapping a data segment that needs to be monitored. A patent implementer may perform determining based on an actual situation. For example, if the data segment has been protected by using another technology, the patent implementer determines that monitoring is not required, or partial monitoring is required.

Dedicated page table pool: is a segment of physical memory that is allocated at an initial stage of kernel initialization, and is used to store a kernel page table. In a kernel initialization process, page mappings of the kernel code segment, the data segment, and the like are placed in the dedicated page table pool, and a page for mapping the dedicated page table pool is also placed in the dedicated page table pool. In a later stage of the kernel initialization, a write permission of the dedicated page table pool is removed. To reflect meanings of the dedicated page table pool more intuitively, in this patent, the dedicated page table pool is further marked by using rop-pool, where the rop-pool indicates that when a kernel is running, the page table pool is presented as read-only in a kernel mode (or in other words, a privilege A mode). If a modification is to be performed, a higher permission is required to be trapped in to complete the modification. The dedicated page table pool is a core control data block in the solutions of this patent.

Self-mapping (self-mapping) mechanism: is for creating the dedicated page table pool, and placing the page table for mapping the dedicated page table pool in the dedicated page table pool. After the kernel initialization is completed, the write permission of the dedicated page table pool is removed by using a CPU privilege higher than the kernel privilege. The write permission cannot be subsequently restored under the kernel privilege, to ensure that important page table data in the dedicated page table pool cannot be modified.

High-privilege validity assessment mechanism: is for a control program with a high privilege to perform validity assessment on a page table permission modification operation delivered by a kernel proxy program. If the page table permission modification operation is valid, a page table permission modification is performed. If the page table permission modification operation is invalid, the page table permission modification is rejected.

In the technical solutions in embodiments of this application, in the kernel initialization process, a proxy program triggers control to remove a write permission of a page table in the dedicated page table pool, and the write permission cannot be subsequently restored under the kernel privilege (for example, a privilege A or a privilege B), to ensure that a permission of a critical memory in the kernel cannot be tampered with. In a kernel running process, the proxy program sends a modification of the permission of the critical memory in the kernel to a control program for execution. The control program performs validity assessment and then determines whether to execute the modification of the critical memory permission in the kernel, to prevent an invalid modification, and ensure normal running of a system.

In addition, non-memory data (such as a register) cannot be prohibited from being modified in the kernel. Periodic detection (alarm) needs to be performed in the control program. In addition to the register, the patent implementer may alternatively perform periodic detection such as abnormal change detection on important memory data such as DMA page table data, rop-pool page table data, the kernel code segment, and the like in the control program based on an actual requirement.

It should be noted that, a dual-privilege technology in embodiments of this application requires that a CPU has different permission levels. Currently, both an arm chip and an x86 chip are general-purpose and support this function.

Further, when creating a page table, an open-source kernel randomly applies for physical memory to store page table data. This is inconvenient for management and control. To manage important page tables together, unified first physical memory is allocated, and the first physical memory is used to store the important page tables.

Currently, there is the following attack manner: directly modifying content in a hard disk file system. For example, if a specific KO is not loaded to memory, an attack is performed by replacing or tampering with the KO in the disk file system. There is another attack manner, that is, the kernel may be directly replaced or modified. In embodiments of this application, to reduce a security risk of the system, a file in the disk file system is ensured through a signature and verification of secure boot, so that any changed content in the disk file system cannot be signed during loading, and the loading fails. In this way, a user can know that a problem occurs in the system.

A second aspect provides a kernel protection apparatus. The apparatus includes:
a processing unit, configured to: work in a first privilege, and detect a page table modification command, where the first privilege includes the first privilege, the page table modification command is used to modify access permission data in a target page table, the target page table is a kernel-related page table, and the first privilege is a kernel privilege; switch from the first privilege to a second privilege, and determine, under the second privilege, whether to modify the target page table based on the page table modification command, where a permission of the second privilege is higher than that of the first privilege; and modify the access permission data in the target page table if determining to modify the target page table.

In a possible design, the kernel-related page table includes any one or more of the following page tables: a page table used for mapping a kernel code segment, a page table used for mapping a driver code segment, and a page table used for mapping a data segment.

Optionally, the page table used for mapping the data segment includes a page table for mapping a data segment in which an important page table is located, and a high-level page table for mapping the data segment.

The determining whether to modify the target page table based on the page table modification command includes:
if the target page table is the page table used for mapping the kernel code segment, and the page table modification command is a preset command, determining to modify the target page table.

In a possible design, the processing unit is further configured to create first physical memory, a first page table and a second page table under the first privilege, where
the first page table and the second page table are stored in the first physical memory, the first page table is a page table used for mapping the first physical memory, and the second page table is a kernel-related page table.

In a possible design, an access permission of the first physical memory is read-only under the first privilege.

In a possible design, the first page table does not include a write permission under the first privilege, and the first page table includes the write permission under the second privilege.

In a possible design, the preset command includes an insn command.

According to a third aspect, this application provides an electronic device. The electronic device has a function of implementing the kernel protection method according to any one of the foregoing aspects and the possible implementations of the foregoing aspects. The function may be implemented by hardware, or may be implemented by the hardware executing corresponding software. The hardware or the software includes one or more modules corresponding to the function.

According to a fourth aspect, this application provides a computer-readable storage medium. The computer-readable storage medium includes computer instructions. When the computer instructions are run on an electronic device, the electronic device is enabled to perform the kernel protection method according to any one of the foregoing aspects and the possible implementations of the foregoing aspects.

According to a fifth aspect, this application provides a computer program product. When the computer program product runs on an electronic device, the electronic device is enabled to perform the kernel protection method according to any one of the aspects and the possible implementations of the aspects.

According to a sixth aspect, a circuit system is provided. The circuit system includes a processing circuit. The processing circuit is configured to perform the kernel protection method according to any one of the foregoing aspects and the possible implementations of the foregoing aspects.

According to a seventh aspect, an embodiment of this application provides a chip system. The chip system includes at least one processor and at least one interface circuit. The at least one interface circuit is configured to: perform a transceiver function, and send instructions to the at least one processor. When the at least one processor executes the instructions, the at least one processor is enabled to perform the kernel protection method according to any one of the foregoing aspects and the possible implementations of the foregoing aspects.

### BRIEF DESCRIPTION OF DRAWINGS

FIG. 1 shows a running principle of an MMU mechanism according to an embodiment of this application;
FIG. 2A and FIG. 2B are page table query mechanisms according to an embodiment of this application;
FIG. 3 is a schematic diagram of an architecture of a system according to an embodiment of this application;
FIG. 4 is a schematic diagram of a structure of a kernel protection apparatus according to an embodiment of this application;
FIG. 5 is a schematic diagram of a software structure of a kernel protection apparatus according to an embodiment of this application;
FIG. 6 is a schematic flowchart of a kernel protection method according to an embodiment of this application;
FIG. 7A and FIG. 7B are schematic diagrams of page tables according to an embodiment of this application;
FIG. 8A to FIG. 8F are schematic diagrams of page tables according to an embodiment of this application;
FIG. 9 to FIG. 12 are schematic flowcharts of a kernel protection method according to an embodiment of this application;
FIG. 13 to FIG. 15 are schematic diagrams of software structures of a kernel protection apparatus according to an embodiment of this application;
FIG. 16 is a schematic diagram of an apparatus according to an embodiment of this application; and
FIG. 17 is a schematic diagram of a chip system according to an embodiment of this application.

### DESCRIPTION OF EMBODIMENTS

### First, technical terms related to embodiments of this application are described:

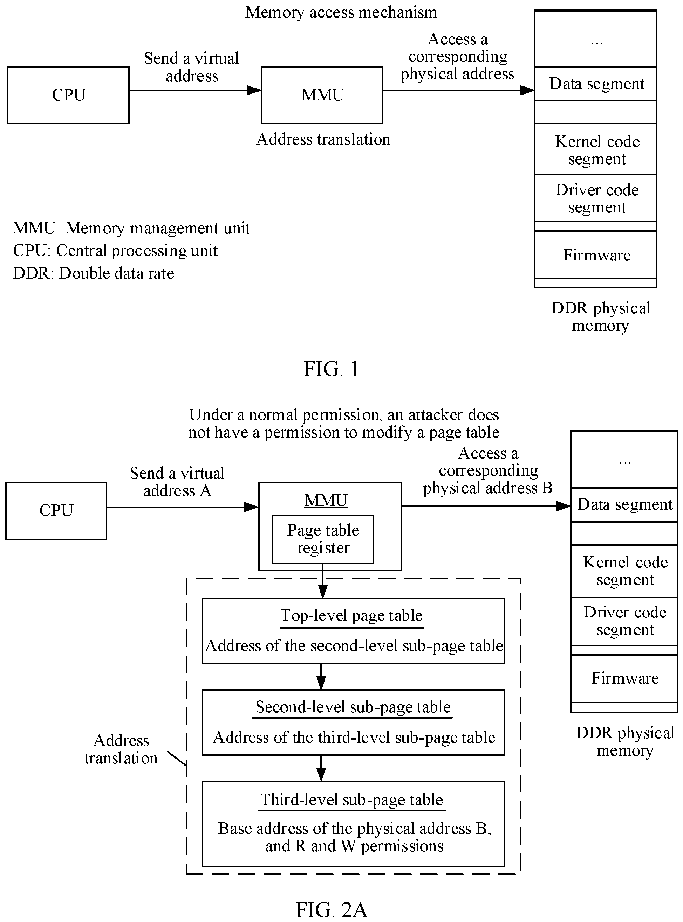

Memory access mechanism: A kernel maps a virtual memory address (virtual address, VA) (which may be a virtual address for short) to a physical memory address (physical address, PA) (which may be a physical address for short) through a memory management unit (memory management unit, MMU). Specifically, as shown in FIG. 1, when a program is run, an address corresponding to the program is the virtual address. A central processing unit (central processing unit, CPU) parses the virtual address into the physical address through the MMU, and then performs addressing access on memory of a corresponding physical address through the MMU.

In embodiments of this application, the memory may be memory in various forms, for example, may be but is not limited to double data rate (double data rate, DDR) memory.

Page table (page) and a function of the page table in memory addressing (a first function of the page table): An MMU mechanism stores a base address of the PA corresponding to the VA by using a lowest-level page table in a multi-level page table.

The multi-level page table includes a top-level page table (which may also be referred to as a first-level page table) and a multi-level sub-page table. Optionally, the top-level page table includes but is not limited to a page directory (page directory, PGD). A sub-page table includes but is not limited to a page table entry (page table, PTE). An address of the top-level page table is stored in a page table register, and an address of the sub-page table is stored in an upper-level sub-page table of the sub-page table. The base address of the PA corresponding to the VA is stored in a lowest-level sub-page table. For example, as shown in FIG. 2A, the top-level page table stores a base address of a second-level sub-page table. The CPU may find a corresponding address of the second-level page table based on the base address and an offset in a virtual address A, and descriptions of subsequent other page tables may be deduced by analogy. For example, the second-level sub-page table stores a base address of a third-level sub-page table (which is a lowest-level sub-page table in an example in FIG. 2A), and descriptions are deduced by analogy. The third-level sub-page table stores a base address corresponding to a physical memory address B. Subsequently, the address of the physical address B may be calculated based on the offset in the virtual address A and the base address corresponding to the physical address B.

FIG. 2A shows a memory addressing solution. When the CPU parses a virtual address A through the MMU, the MMU first accesses the page table register to obtain a physical address of the top-level page table, and performs addressing access on a corresponding memory address based on the physical address of the top-level page table to obtain the top-level page table. Then, the MMU parses sub-level page tables level by level, obtains, from a lowest-level sub-page table, a base address of a physical address B corresponding to the to-be-accessed virtual address A, and calculates the physical address B based on the base address and the offset (offset) in the virtual address, to address the physical address B.

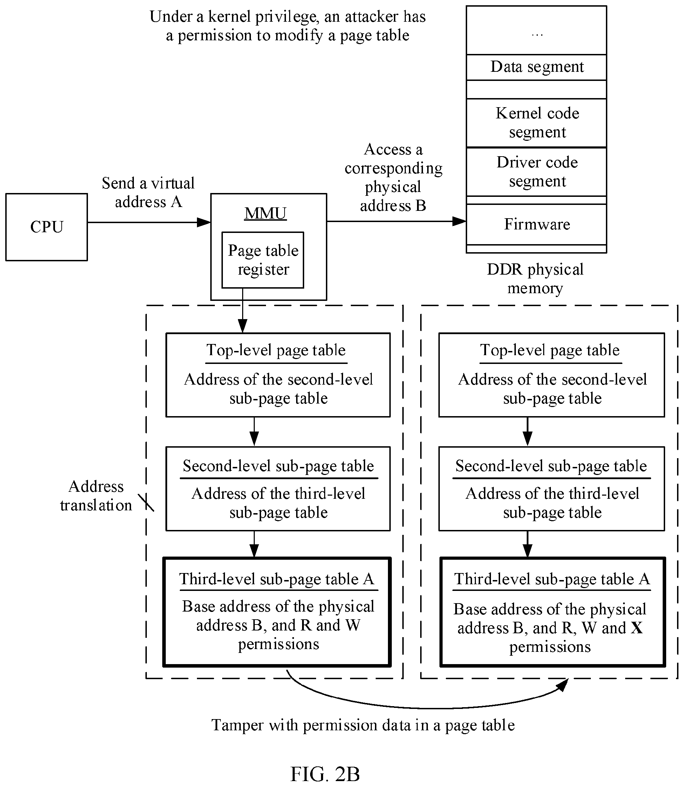

Page table permission technology (a function of the page table in memory protection (a second function of the page table)): In some solutions, to implement integrity protection for kernel-related memory in a kernel running process, a page table permission technology may be used to control an access permission of kernel-related memory space (memory area). The page table permission technology adds an access permission of memory (such as RWX) to a page table corresponding to the memory to prevent vulnerability exploitation and prevent attacks of kernel code tampering, data segment injection and execution, and the like. R indicates a read permission, that is, a read operation may be performed on corresponding memory. W indicates a write permission, that is, a write operation may be performed on corresponding memory. X indicates an execute permission, that is, instruction code in corresponding memory may be executed. Corresponding instruction code cannot be executed without the execute permission. For example, as shown in FIG. 2A, access permission data in the third-level sub-page table is the R and W permissions, indicating that the read and write operations are allowed to be performed on memory corresponding to an address B. Still as shown in FIG. 2B, access permission data in the third-level sub-page table is R, W, and X permissions, indicating that the read, write, and execute operations are allowed to be performed on the memory corresponding to the address B.

The kernel-related memory may be memory used for storing kernel-related code and kernel-related data. For example, the kernel-related memory may include but is not limited to memory in which a data segment is located and memory in which a code segment is located. The code segment includes but is not limited to a kernel code segment and a driver code segment. The kernel code segment includes but is not limited to a kernel vmlinuz.

In embodiments of this application, a driver may alternatively be referred to as a driver module, a driver file, and the like, and the name does not constitute a limitation on a function of the driver. The driver code segment is a code segment of the driver. Optionally, the driver module includes but is not limited to a ko module. Optionally, the driver code segment includes but is not limited to a ko code segment.

In embodiments of this application, a page table used for mapping the kernel-related memory may be referred to as a kernel-related page table. The kernel-related page table includes but is not limited to: a page table used for mapping the kernel code segment, a page table used for mapping the driver code segment, and a page table used for mapping the data segment.

In some solutions, there may be different access permissions for different memory space. For example, as shown in FIG. 2B, to prevent an unauthorized intruder from injecting invalid code into the data segment and executing the invalid code that causes system logic tampering, an execute permission of a data segment corresponding to the physical address B may be removed (that is, this part of data only has the read and write permissions) from the third-level sub-page table, so that even if the invalid code is injected into the memory in which the data segment is located, the invalid code cannot be executed, thereby ensuring system security.

Page table mapping may include mapping between a physical address and a virtual address in the page table.

It may be seen that access permission data in the page table is important data, and the access permission data can improve security of a segment of memory as much as possible by controlling read, write, and execute permissions of the segment of memory.

In embodiments of this application, a page table used for storing a physical address corresponding to a data segment and storing an access permission corresponding to the data segment is referred to as a page table used for mapping the data segment, and may also be a page table of the data segment for short. For example, the third-level sub-page table shown in FIG. 2A is a page table of the data segment.

Similarly, the page table used for mapping the kernel code segment is a page table of the kernel code segment for short. The page table used for mapping the driver code segment is a page table of the driver code segment for short.

Page table permission priority: A permission in a high-level page table overwrites a permission in a low-level page table. For example, a permission in the top-level page table is set to be non-executable, and sub-level page tables included in the top-level page table cannot be executed even if the sub-level page tables include the execute permission. For example, if a permission of the address B in the top-level page table shown in FIG. 2A is set to be non-executable, subsequently, even if the permission corresponding to the address B in the third-level sub-page table is set to be executable, data in memory space corresponding to the address B is not allowed to be executed.

In some solutions, there are different page table mapping mechanisms at different running privilege levels of the CPU. Page table mapping mechanisms at different privilege levels may be used to control, at different privilege levels, an access permission of specific memory. Optionally, memory A has a read-only permission under a normal permission, to be specific, the memory A is only allowed to be read, and the memory A is not allowed to be written. The memory A has the read, write, and execute permissions under a first privilege. For example, FIG. 2A shows page table mapping under the normal permission. FIG. 2B shows page table mapping under the first privilege.

Vulnerability: may be considered as a system or program code defect that may be exploited by an attacker, and may be a code bug, a system design defect, and the like.

First privilege: In some cases, the attacker may exploit the vulnerability (including but not limited to a vulnerability such as an out-of-bounds array and the like) to perform a system permission escalation, that is, an escalation from the normal permission to the first privilege (including but not limited to a root permission). After the attacker obtains the first privilege, an attacked system no longer performs security verification on an operation of the attacker such as a page table modification based on a reason such as trust. Consequently, the attacker can tamper with the page table in a manner such as re-creating the page table, page table double-mapping (double-mapping), and the like, including but not limited to modifying permission data in the page table, for example, modifying the read, write, and execute permissions corresponding to a specific segment of memory (for example, memory associated with the kernel) in the page table, to implement an attack on a system kernel. For example, after obtaining the first privilege, the attacker may bypass a defense mechanism of the system, and add an execute (X) permission to permission data in a third-level sub-page table A shown in FIG. 2B. In this way, subsequently, the attacker may inject malicious code into the memory space corresponding to the address B and execute the malicious code, to implement the attack on the system kernel.

The page table double-mapping may be re-establishing page table mapping for physical memory, which is equivalent to re-establishing a page table for the physical memory. It is difficult to attack by using the page table double-mapping.

A page table modification is usually modifying data in the page table, for example, modifying the access permission data in the page table.

Kernel intrusion: In some manners, the attacker may tamper with implementation logic of the kernel code to intrude the kernel. In some other manners, the attacker injects the malicious code into the kernel to lurk into the system, and continuously steals important data without being discovered by an administrator or a user. In the foregoing attack manners, the system may be directly damaged; or even if the system is not directly damaged, serious harms such as user information disclosure, property damage, or the like may be caused.

Kernel code segment tampering: In some attack manners, after obtaining the first privilege, the attacker may obtain a permission to perform the write operation on the kernel code segment. In this way, the attacker may tamper with the kernel code in the kernel code segment, to tamper with implementation logic of the system, to implement an attack objective.

Data segment injection and execution: In some attack manners, after obtaining the first privilege, the attacker may obtain a permission to perform the write and execute operations on the data segment, and the attacker may inject the malicious code into the data segment and execute the malicious code, to implement the attack objective.

To prevent the foregoing kernel intrusion or system lurking problems, embodiments of this application provide a kernel protection method. In consideration that the page table stores some access permissions of the kernel-related memory, the page table may be protected to protect the kernel-related memory, to implement protection on the system kernel.

In the technical solutions of this application, the data segment and the code segment do not have both the write and execute permissions. The data segment is used as an example. If the write operation is allowed to be performed on the data segment, the execute operation is not allowed to be performed on the data segment, or the execute permission is prohibited from being added to the data segment. In this way, even if the attacker performs a permission escalation to obtain the first privilege and injects the malicious code into the data segment, the attacker cannot run the injected malicious code because the attacker is prohibited from adding the execute permission to the data segment. In this way, execution of the malicious code can be prevented as much as possible.

The code segment is used as an example. If the execute operation is allowed to be performed on the code segment, the write operation is not allowed to be performed on the code segment, or the write permission is prohibited from being added to the code segment. In this way, because the write operation is not allowed to be performed on the code segment under the first privilege, the kernel code may be prevented from being tampered with as much as possible.

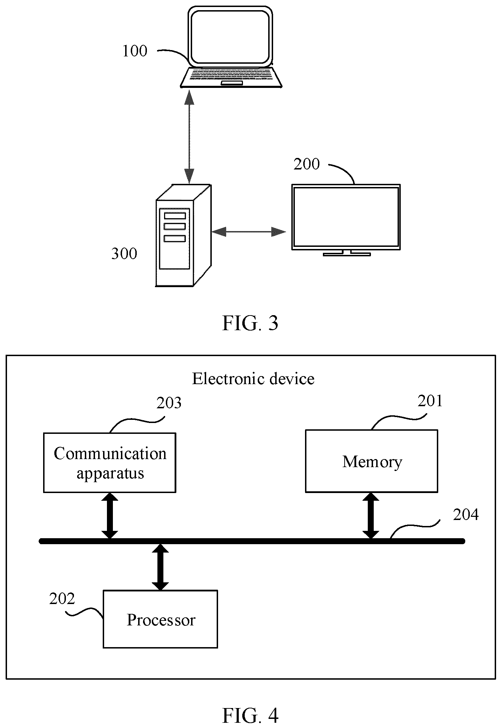

The kernel protection method provided in embodiments of this application may be applied to a system that requires kernel protection. FIG. 3 shows an example of an architecture of a system. The system includes one or more electronic devices. The electronic device may be a cloud-side device or an end-side device. The cloud-side device includes but is not limited to a server (for example, a server 300 shown in FIG. 3). The end-side device includes but is not limited to a terminal (for example, a notebook computer 100 or a desktop computer 200). Certainly, FIG. 3 is merely an example, and a specific form of the electronic device is not limited in this embodiment of this application. The electronic device in this embodiment of this application may be a device, for example, a mobile phone or a computer, on which a kernel runs and kernel protection needs to be performed.

FIG. 4 is a possible schematic diagram of a structure of an electronic device according to an embodiment of this application. For example, the device may be a terminal, a component in the terminal, a server, or a component in the server. In a possible implementation, the electronic device may include a memory 201, a processor 202, a communication device 203, and a bus 204. The memory 201, the processor 202, and the communication device 203 are connected to each other through the bus 204.

The memory 201 may be configured to store data, a software program, and a module, and mainly includes a program storage area and a data storage area. The program storage area may store an operating system, an application program required for at least one function, and the like. The data storage area may store data created during use of the apparatus, and the like. In this embodiment of this application, the operating system may include a general-purpose operating system (for example, a Linux^{®} system) or a secure operating system. The secure operating system may be, for example, a trusted execution environment operating system (trusted execution environment operating system, TEE OS). The application program required for the at least one function may include a program based on kernels of various operating systems and a program of a driver module. The data stored in the data storage area may include but is not limited to kernel data.

In some embodiments of this application, a processor (for example, a CPU) may include an MMU, or the MMU may be a functional module independent of the CPU.

In some feasible embodiments, the memory 201 may be a floppy disk, a hard disk such as a built-in hard disk and a removable hard disk, a magnetic disk, a compact disc, a magneto-optical disk such as a compact disc read-only memory (compact disc read-only memory, CD_ROM) or a digital video disc read-only memory (digital video disc read-only memory, DVD_ROM), a non-volatile storage device such as a random access memory (random access memory, RAM), a read-only memory (read-only memory, ROM), a programmable read-only memory (programmable read-only memory, PROM), an erasable programmable read-only memory (erasable programmable read-only memory, EPROM), an electrically erasable programmable read-only memory (electrically erasable programmable read-only memory, EEPROM), a flash memory, or any other form of storage medium well-known in the technical field.

The processor 202 is configured to control and manage an action of a device, for example, perform various functions of the device and process data by running or executing the software program and/or the module stored in the memory 201, and by invoking the data stored in the memory 201. The processor 202 may include at least one of a secure element (Secure element, SE), a central processing unit, a digital signal processor, an artificial intelligence (artificial intelligence, AI) processor, a microprocessor, a microcontroller, or the like.

Optionally, the processor selectively includes an application-specific integrated circuit, a field programmable gate array or another programmable logic device, a transistor logic device, a hardware accelerator, or any combination thereof. Optionally, the processor may be a combination implementing a computing function. Further, in this embodiment of this application, the processor 202 may optionally include another hardware accelerator. The combination may be used to support the device in performing a kernel protection function in this application. For a specific process of a kernel protection method, refer to descriptions in the following method embodiments.

The communication device 203 is configured to support the electronic device in communicating with another device. The communication device 203 may be a receiver, a receiving circuit, a transmitter, a sending circuit, a transceiver having a transceiver function, a transceiver circuit, and the like. For example, the communication device 203 is a transceiver circuit based on near field communication (near field communication, NFC), or a short-distance communication device in another mode such as Bluetooth.

The bus 204 may be a peripheral component interconnect (peripheral component interconnect, PCI) bus, an extended industry standard architecture (extended industry standard architecture, EISA) bus, and the like. The bus may be classified into an address bus, a data bus, a control bus, and the like. For ease of representation, only one bold line is used for representation in FIG. 4, but this does not mean that there is only one bus or only one type of bus.

In some implementations of this embodiment of this application, the processor 202 may be considered as an apparatus (which may be a kernel protection apparatus for short) configured to implement the kernel protection function, and may be used as a computational core to implement the kernel protection function. Alternatively, the processor 202 may be located in a kernel protection apparatus, and the processor 202 and another component in the kernel protection apparatus may jointly implement the kernel protection function. The kernel protection apparatus may be one or more chips, or a chipset, or may selectively run software to work.

FIG. 4 is merely an example of a structure of an electronic device according to an embodiment of this application. In some other embodiments, the electronic device may alternatively have more or fewer components, or have another component layout manner, or some components in FIG. 4 are split, or some components shown in FIG. 4 are integrated. An implementation form of the electronic device is not limited in this embodiment of this application.

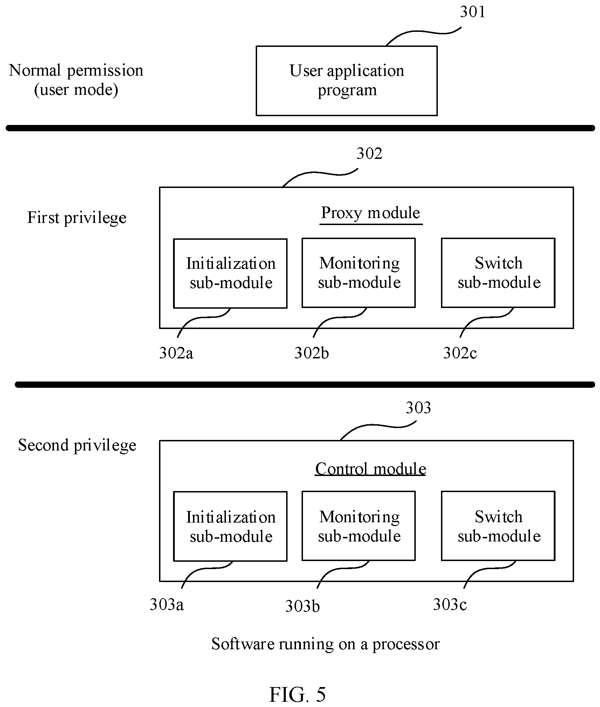

FIG. 5 is a schematic diagram of an architecture of software running on a processor 202 according to an embodiment of this application. The processor 202 may be configured to run a user application program 301, a proxy module 302, and a control module 303. The processor 202 has different running permissions, and various application programs respectively run under corresponding running permissions.

As a possible implementation, the user application program 301 usually runs in a user permission (or referred to as a normal permission). The user application program 301 may access hardware and a corresponding resource by invoking an interface that is provided by a kernel and that is for accessing the hardware and the resource. Usually, under the user permission, the hardware and the resource that can be accessed by the user application program 301 are limited, that is, the user application program 301 can only access hardware and a resource that are allowed to be accessed by the user permission, to reduce a risk of tampering and attacking a system by the user application program 301.

The kernel runs under a first privilege, and the first privilege is higher than the user permission. Therefore, the kernel running under the first privilege can access more hardware and resources than the user application program 301 running under the user permission. It should be noted that, in some cases, the user application program 301 may also be trapped in the first privilege and run. For example, when a system call is executed, the user application program 301 may be trapped in the first privilege and run.

The proxy module 302 runs under the first privilege, and a permission of the first privilege is higher than that of the user permission. As a possible implementation, the proxy module 302 includes an initialization sub-module 302a, a monitoring sub-module 302b, and a switch sub-module 302c.

In a kernel initialization process, the initialization sub-module 302a in the proxy module may cooperate with an initialization sub-module 303a in the control module 303 to complete some configurations in kernel initialization. Optionally, in the kernel initialization process, the initialization sub-module 302a may send kernel-related information to the initialization sub-module 303a. Optionally, the kernel-related information includes but is not limited to any one or more of the following information: information about an important page table and information about an important register.

In a kernel running process, the monitoring sub-module 302b may cooperate with a monitoring sub-module 303b in the control module to implement a monitoring function. The monitoring function includes but is not limited to any one or more of the following: detecting whether a modified page table belongs to a page table that needs to be monitored (namely, the important page table). If the modified page table is not the important page table, processing may be performed based on open source logic. If the modified page table is the important page table, a related page table modification command (for example, a page table modification request) may be forwarded to the monitoring sub-module 303b. The page table modification command is used to modify access permission data in a target page table. The target page table is a kernel-related page table.

The kernel-related page table includes any one or more of the following page tables: a page table used for mapping a kernel code segment, a page table used for mapping a driver code segment, and a page table used for mapping a data segment.

For example, when the page table modification command is detected, a corresponding page table modification command is forwarded to the monitoring sub-module 303b in the control module 303. The monitoring sub-module 303b determines, based on the page table modification command, whether to perform a page table modification operation; and if the page table modification command is valid, modifies a corresponding page table; or if the page table modification command is invalid, rejects to modify the corresponding page table.

In the kernel running process, when detecting that the kernel loads (inserts) a driver, the switch sub-module 302c may send a monitoring function disabling command to a switch sub-module 303c in the control module 303. The monitoring function disabling command is used to indicate/request/inform the control module 303 to stop validity monitoring of a page table modification command related to the driver code segment. In this way, after receiving the page table modification command related to the driver code segment (for example, a command for modifying an access permission of a ko module in a page table), the control module 303 (for example, the monitoring sub-module 303b in the control module 303) no longer assesses validity of the page table modification command, but directly modifies a corresponding page table based on the page table modification command.

The switch sub-module 302c is configured to deliver a related command to the control module 303 when the kernel loads a module such as the driver, so that the system supports insertion of the module such as the driver. The related command may be, for example, a command that indicates to disable the monitoring function.

The switch sub-module 302c may further deliver a monitoring function restoration command to the switch sub-module 303c in the control module 303 when insertion of the driver is completed. The monitoring function restoration command is used to indicate/request/inform the control module 303 to restore the monitoring function for the driver code segment.

The control module 303 runs under a second privilege, and a permission of the second privilege is higher than that of the first privilege. As a possible implementation, the control module 303 includes the initialization sub-module 303a, the monitoring sub-module 303b, and the switch sub-module 303c.

The initialization sub-module 303a may receive the kernel-related information from the initialization sub-module 302a, and perform initialization based on the kernel-related information.

The monitoring sub-module 303b may receive the page table modification command from the monitoring sub-module 302b, and determine whether the page table modification command is valid; and if the page table modification command is valid, modify a corresponding page table based on the page table modification command; or if the page table modification command is invalid, reject to modify the corresponding page table.

The monitoring sub-module 303b may further detect a kernel-related register after kernel initialization is completed. When detecting an operation of tampering with a register, an alarm is reported to the proxy module. The monitoring sub-module 303b detects the kernel-related register, and the detection may be periodic detection or detection according to a policy. For example, when specific events are detected, detection of the kernel-related register is triggered. A detection occasion and a detection condition of the monitoring sub-module 303b are not limited in this embodiment of this application.

The switch sub-module 303c may receive the monitoring function disabling command from the switch sub-module 302c, and stop validity monitoring on the page table modification command related to the driver code segment based on the monitoring function disabling command. The switch sub-module 303c may further receive the monitoring function restoration command from the switch sub-module 302c, and restore the validity monitoring on the page table modification command related to the driver code segment based on the monitoring function restoration command. To further improve system security, the switch sub-module 303c may determine whether the monitoring function disabling command from the switch sub-module 302c is valid. As a possible implementation, the switch sub-module 303c determines whether an address of the monitoring function disabling command is located in a kernel code segment area; and if the address of the monitoring function disabling command is located in the kernel code segment, determines that the monitoring function disabling command is valid; otherwise, if the address of the monitoring function disabling command is not located in the kernel code segment, determines that the monitoring function disabling command is invalid.

Optionally, the control module 303 is first enabled, and then the proxy module 302 is enabled. That is, the control module 303 works before the proxy module 302. In this way, working reliability of the control module 303 can be improved as much as possible, so that the control module 303 can receive data from the proxy module 302, and control and manage a modification of the page table based on these pieces of data.

Optionally, validity of the proxy module 302, validity of the ko module, validity of the kernel segment, and the like are ensured by secure boot. In this way, it can be ensured that the proxy module 302 and the ko module are not tampered with or replaced on a hard disk.

Optionally, integrity of the kernel code segment area is ensured by using the secure boot. After the kernel is loaded, the solution of this patent has already started to protect the kernel. Therefore, a command in the kernel code segment area is considered as a valid command.

The control module is usually located in an environment with high security. For example, in a secure world of ARM, hardware/firmware is used to ensure security of the control module, and the control module is almost immune to a software attack.

In some embodiments, the proxy module may also be referred to as a proxy program or another name, but this does not constitute a limitation on a function of the proxy module. Similarly, the control module may also be referred to as a control program or another name, but this does not constitute a limitation on a function of the control module.

FIG. 5 is merely an example of an architecture of software of an electronic device according to an embodiment of this application. In some other embodiments, the electronic device may further have more or fewer modules, or have another module layout manner, or some modules in FIG. 5 are split, or some modules shown in FIG. 5 are integrated. A specific form and layout of the software running on the electronic device are not limited in this embodiment of this application.

In this specification and accompanying drawings of this application, the terms "first", "second", and the like are intended to distinguish between different objects or distinguish between different processing on a same object. The words "first", "second", and the like may distinguish between same items or similar items with basically the same functions and purposes. For example, a first device and a second device are merely intended to distinguish between different devices, and do not limit a sequence thereof. A person skilled in the art may understand that the words "first", "second", and the like do not limit a quantity or an execution sequence, and the words "first", "second", and the like do not indicate a definite difference.

"At least one" means one or more.

"A plurality of" means two or more than two.

The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces) " or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device.

It should be noted that in embodiments of this application, words such as "example" or "for example" are used to represent giving an example, an illustration, or a description. Any embodiment or design solution described as an "example" or "for example" in embodiments of this application should not be explained as being more preferred or having more advantages than another embodiment or design solution. To be precise, the word such as "example" or "for example" is intended to present a related concept in a specific manner.

In embodiments of this application, when a specific message or instruction is used for xx, it means that the message or the instruction may be used to implement a specific function (for example, indicate to modify a page table), but is not limited to being specifically used to implement the function.

An architecture of a system and a service scenario described in this application are intended to describe the technical solutions of this application more clearly, and do not constitute any limitation on the technical solutions provided in this application. A person of ordinary skill in the art may know that, with evolution of the architecture of the system and emergence of a new service scenario, the technical solutions provided in this application are also applicable to similar technical problems.

The following describes working principles of the foregoing software and hardware modules with reference to method embodiments.

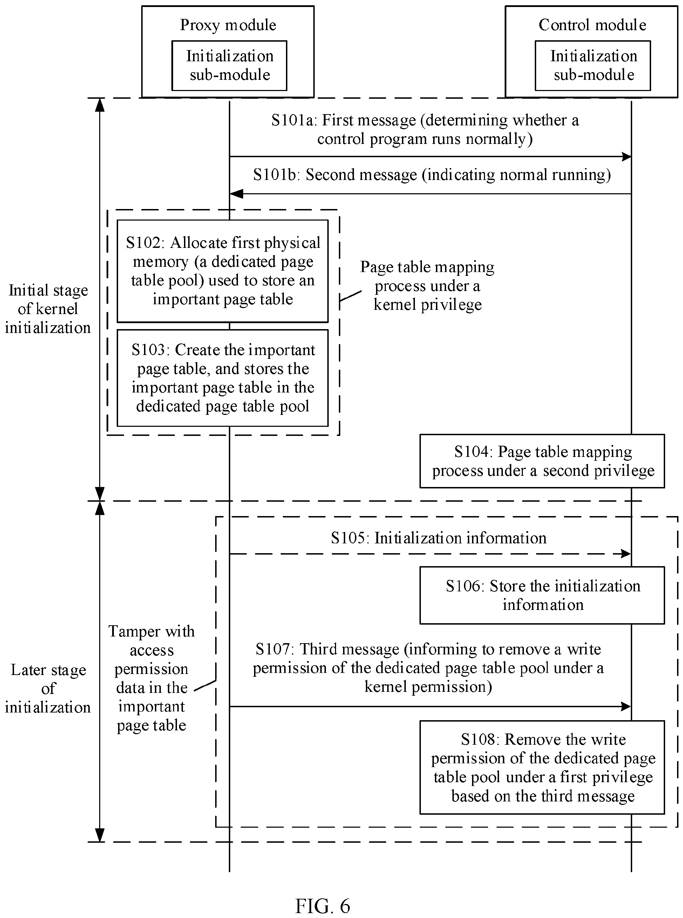

Embodiments of this application provide a kernel protection method. The method is applicable to a kernel initialization procedure. FIG. 6 shows the kernel initialization procedure. The kernel initialization procedure includes the following steps:
S101: A proxy module determines whether a control module runs normally.

In this embodiment of this application, the control module runs under a second privilege that is higher than a first privilege. The control module is configured to: determine whether a corresponding page table modification command is valid, and perform a page table modification operation when the page table modification command is valid. Therefore, a prerequisite for normal implementation of the technical solution in this embodiment of this application is to ensure that the control module works normally.

As a possible implementation, S101 may be implemented as follows: S101a: In a kernel initialization process, the proxy module sends a first message to the control module. S101b: The control module sends a second message to the proxy module. The first message is used to determine whether the control module runs normally. The second message indicates that the control module runs normally.

It may be understood that, if the proxy module receives the second message from the control module, it indicates that the control module runs normally. Then, a subsequent procedure of this embodiment of this application continues to be performed. For example, the following steps S102 and S103 continue to be performed, to perform page table mapping under the first privilege.

On the contrary, if the proxy module does not receive the second message from the control module, or the second message is incorrect (that is, a problem occurs during performing of S101b), it means that the control module does not run normally. Then, the proxy module exits working, a subsequent step in this embodiment of this application is not performed, and a kernel performs a corresponding operation based on a procedure in the conventional technology.

S 102: The proxy module allocates first physical memory.

The first physical memory is used to store a page table used for mapping important memory. The page table used for mapping the important memory may be referred to as an important page table. The important memory is related memory that ensures normal running of the kernel, and the important memory has a great impact on kernel security. Memory related to kernel running includes but is not limited to memory in which a data segment is located and memory in which a code segment is located. The code segment includes but is not limited to a kernel code segment and a driver code segment. In the following embodiments, a concept of a dedicated page table pool is used to replace the first physical memory.

Correspondingly, the important page table includes but is not limited to a page table of a partial data segment, a page table of the kernel code segment, and a page table of the driver code segment, and these page tables may be referred to as second page tables. Alternatively, the second page table is a kernel-related page table.

In this embodiment of this application, the important page table may further include a page table used for mapping the dedicated page table pool (rop-pool), and this type of page table may be referred to as a first page table. The first page table stores a base address of a physical address of the dedicated page table pool, and further stores read, write, and execute permissions corresponding to the dedicated page table pool.

As a possible implementation, when the control module runs normally, at an initial stage of kernel boot (namely, kernel initialization), the proxy module allocates a segment of physical memory (namely, the first physical memory) as the dedicated page table pool, and the dedicated page table pool may be used to store a plurality of the foregoing important page tables.

S 103: The proxy module creates the important page table, and stores the important page table in the dedicated page table pool.

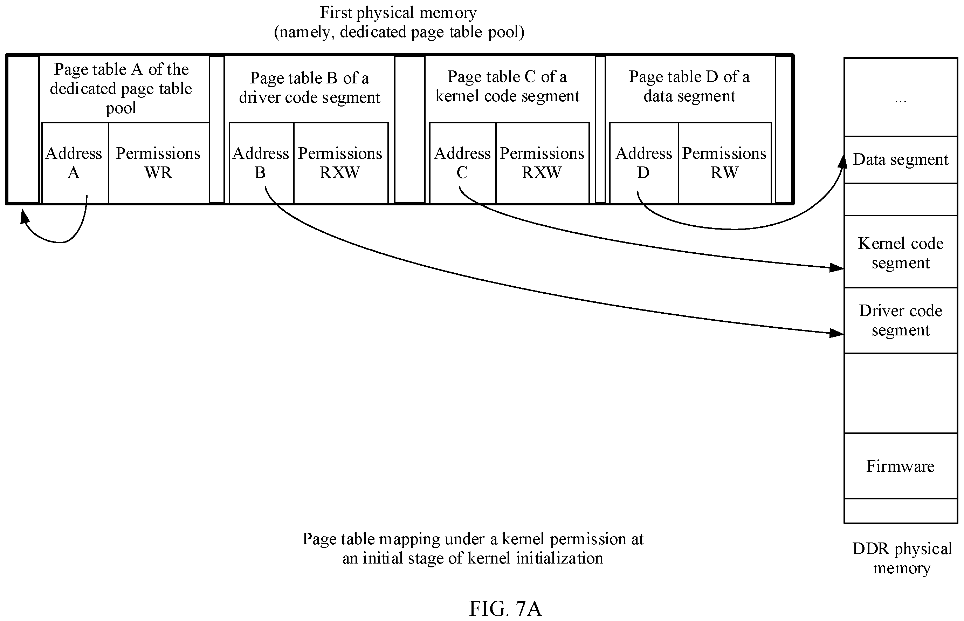

For example, FIG. 7A shows an example of the dedicated page table pool created by the proxy module. As shown in FIG. 7A, in a process of creating a related page table for the dedicated page table pool, the proxy module stores some important page tables (for example, the page table of the partial data segment, the page table of the kernel code segment, the page table of the driver code segment, and a page table of the dedicated page table pool) in the dedicated page table pool. The page table of the dedicated page table pool stores the base address of the physical address of the entire dedicated page table pool, and stores the read, write, and execute permissions of the entire dedicated page table pool.

In this embodiment of this application, a mechanism in which the dedicated page table pool stores the first page table (namely, a page table for mapping the segment of physical memory of the dedicated page table pool) is referred to as a self-mapping (self-mapping) mechanism. In this way, a function of mapping a page table to the physical memory (namely, the dedicated page table pool) in which the page table is located can be implemented, so that the dedicated page table pool is controlled by using the page table, to control all important page tables in the dedicated page table pool. Still as shown in FIG. 7A, a page table A used for mapping the dedicated page table pool is stored in the dedicated page table pool, and the page table A is a page table for mapping the segment of physical memory of the entire dedicated page table pool. In this way, the physical memory of the entire dedicated page table pool may be controlled by using the physical memory in which the page table A is located, that is, the read, write, and execute permissions of the important page tables (including but not limited to the code segment and the data segment) stored in the segment of memory of the dedicated page table pool may be uniformly controlled by using the page table A. In a self-mapping solution shown in FIG. 7A, the page table A is stored in the physical memory of the dedicated page table pool, so that control on an access permission of the page table A can be implemented. Further, the write permission of the page table A can be removed only by using a higher CPU permission, that is, the write permission of the entire segment of physical memory of the dedicated page table pool can be removed by using the higher CPU permission (for example, the second privilege), and the write permission of the page table A cannot be restored by using the first privilege.

It should be noted that, at an initial stage of kernel initialization, because operations such as loading data and code to kernel-related memory exist, the kernel-related memory needs to have corresponding write and execute permissions. For example, FIG. 7A shows permission data of each page table in the important page tables at the initial stage of the kernel initialization. A page table B of the driver code segment has the read, write, and execute permissions, to ensure that at the initial stage of the kernel initialization, driver code can be inserted into and executed in memory in which the driver code segment is located. A page table C of the kernel code segment has the read, write, and execute permissions, to ensure that at the initial stage of the kernel initialization, kernel code is loaded to memory in which the kernel code segment is located, and the loaded kernel code is executed. A page table D of the data segment has the read and write permissions, to ensure that at the initial stage of the kernel initialization, corresponding data is written into memory in which the data segment is located.

FIG. 7A further shows access permissions of the page table A, namely, the first page table in the important page tables, at the initial stage of the kernel initialization. It may be seen that the access permissions of the page table A are the read and write permissions.

The foregoing S 102 and S 103 are a page table mapping process corresponding to the first privilege at the initial stage of the kernel initialization. In the page table mapping process, corresponding access permission data and address mapping data are written into each important page table.

S 104: A page table mapping process under the second privilege.

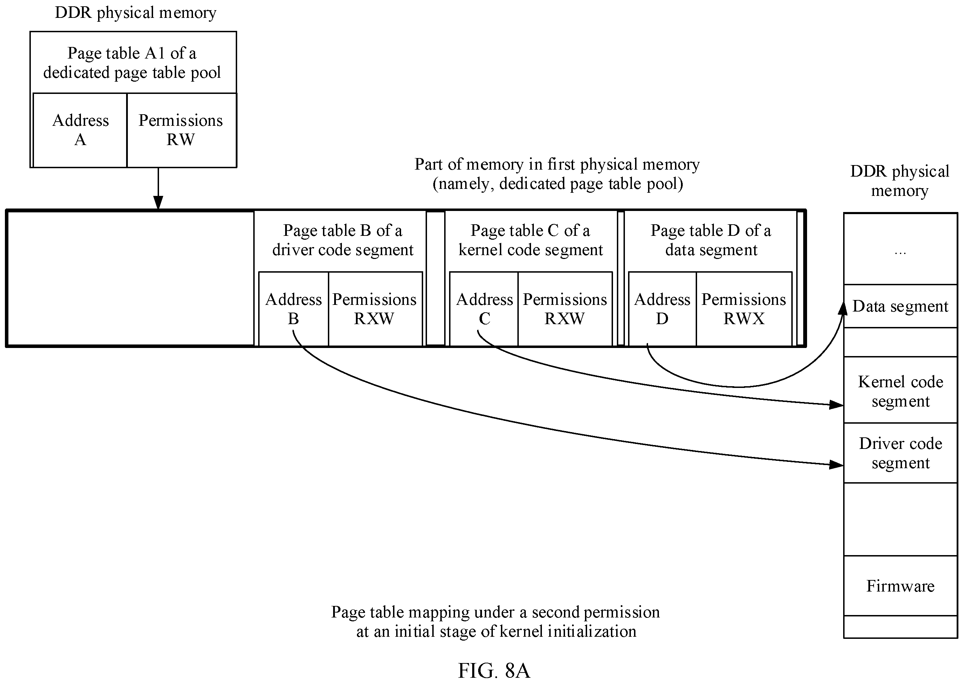

In some embodiments, at the initial stage of the kernel initialization, there is also a corresponding page table mapping mechanism under the second privilege. Optionally, the control module implements page table mapping under the second privilege. Optionally, there is no self-mapping under the second privilege, and the page table of the dedicated page table pool is no longer stored in the dedicated page table pool. For example, FIG. 8A shows a page table mapping mechanism under the second privilege. Under the second privilege, the control module creates a new page table A1 for the dedicated page table pool, and the page table A1 of the dedicated page table pool is no longer stored in the dedicated page table pool.

It should be noted that, under the second privilege, access permission data in the page table A1 of the dedicated page table pool needs to include the write (W) permission, so that the control module can subsequently modify a page table in the dedicated page table pool when the page table modification command is valid.

Optionally, an execution occasion of step S 104 is not limited. For example, S 104 may be performed after S 101, or may be performed on another occasion.

In this embodiment of this application, to improve security of the kernel-related memory, the write permission in the dedicated page table pool under the first privilege may be removed when the dedicated page table pool no longer needs a write access permission after related data and code in the kernel-related memory are loaded.

As mentioned above, because the access permission in the page table A corresponding to the dedicated page table pool is read-only, a write operation cannot be performed on the dedicated page table pool under the first privilege, and therefore important page tables in the dedicated page table pool cannot be modified, that is, the write or execute permission in the important page tables cannot be removed under the first privilege. As a possible implementation, to remove the write permission in the dedicated page table pool under the first privilege, at a later stage of the kernel initialization, the control module running under the second privilege modifies the page table A in the dedicated page table pool, that is, removes the write permission in the page table A under a second permission. The second privilege is higher than the first privilege. Subsequently, in a kernel running phase, even if an attacker obtains the first privilege, the attacker cannot tamper with data in the dedicated page table pool under the first privilege (including that the attacker cannot tamper with access permission data in the page table AD under the first privilege). The following steps S105 to S 108 are specific implementations of the control module modifying the page table A.

S105: The proxy module sends initialization information to the control module.

Optionally, the initialization information includes but is not limited to any one or more of the following information: an address of memory in which the kernel code segment is located (for example, a start address and a stop address of the kernel code segment), an address of memory in which the driver code segment is located (for example, a start address and a stop address of the driver code segment), an address of memory in which the data segment is located, address information of memory in which the dedicated page table pool is located (for example, a start address and a stop address of the dedicated page table pool), and an address of a kernel-related important register.

Optionally, the address information of the memory in which the dedicated page table pool is located includes an address of memory in which each page table in the dedicated page table pool is located.

S106: The control module stores the initialization information.

Subsequently, in a kernel running process, the control module may perform validity assessment and periodic detection based on the initialization information.

The control module may perform validity assessment on a page table modification in the dedicated page table pool. The periodic detection is used to detect security of storage space (such as a register) that is not controlled by a page table. For specific implementations of the validity assessment and the periodic detection, refer to the following embodiments.

As a possible implementation, the control module may calculate a hash (hash) value of the register, and determine security of the register based on the hash value of the register.

Optionally, the control module may further calculate a hash value of a code segment, and store the hash value of the code segment.

Optionally, a hash value of a register is usually 4/8 bytes, and a data amount is not large. Alternatively, the control module may directly store a value of the register.

S107: The proxy module sends a third message to the control module.

Optionally, the third message carries the physical address of the dedicated page table pool.

The third message is used to inform, request, or indicate the control module to remove the write permission of the dedicated page table pool under the first privilege. This means that, subsequently, the write operation is not allowed to be performed on the dedicated page table pool under the first privilege, so that system security under the first privilege can be improved.

S108: The control module removes the write permission of the dedicated page table pool under the first privilege based on the third message.

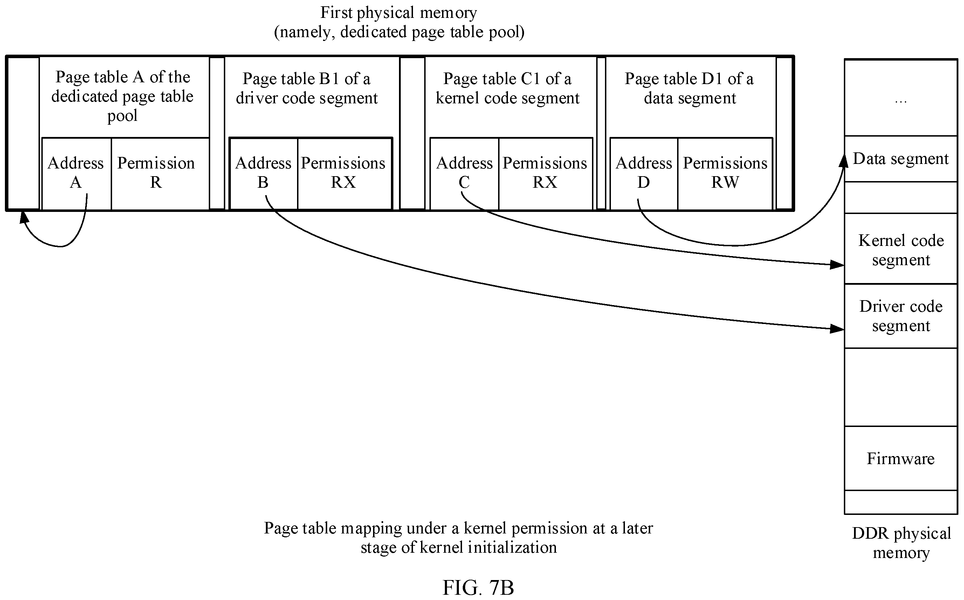

For example, as shown in FIG. 7B, after the kernel initialization is completed, for example, at the later stage of the kernel initialization, the control module modifies the access permission data of the page table A from the permissions WR to the permission R, that is, removes the write permission in the page table A. The page table A (an example of the first page table) does not include the write permission. This means that, subsequently, under the first privilege (for example, a kernel privilege), the access permission of the dedicated page table pool is read-only, content in the dedicated page table pool cannot be modified, and therefore access permission data in important page tables B to D cannot be modified under the first privilege. In this way, in the kernel running process, the write permission of the dedicated page table pool is prevented from being restored. Through the operations in the foregoing steps, there is no permission to rewrite the dedicated page table pool in a kernel mode, that is, the write permission of the dedicated page table pool cannot be restored, to ensure that kernel page table data in the dedicated page table pool cannot be modified, so that security of a system kernel can be improved.

Optionally, in this embodiment of this application, as shown in FIG. 7B, at the later stage of the kernel initialization, a write permission of another important page table may be further modified. For example, the write permission of the driver code segment and the kernel code segment is removed, and the execute permission of the data segment is removed.

Optionally, in this embodiment of this application, for a specific segment of physical memory, it may be set that the segment of physical memory does not have both the write and execute permissions.

As a possible implementation, an initialization sub-module records a value of the access permission in the dedicated page table pool, to ensure that the physical memory does not have both the X and W permissions, that is, after the X permission is set, the W permission is not allowed to be set. In this way, an attacker can be prevented from setting the R and W permissions first, modifying code, and then setting the R and X permissions, to implement an attack.

Optionally, the page table mapping mechanism of the second privilege and a page table mapping mechanism of the first privilege are independent of each other. The first privilege and the second privilege have their own independent page tables, namely, independent permissions. For example, page tables that are mapped to a same physical address may be stored in different areas. For example, as shown in FIG. 8A, under the second privilege, the control module may re-create a page table A1 for memory of the dedicated page table pool, and store the page table A1 pointing to the dedicated page table pool outside the dedicated page table pool. In other words, under the second privilege, the page table mapping mechanism may not have self-mapping. In comparison, under the first privilege, the page table used for mapping the dedicated page table pool is the page table A, and the page table A is stored in the dedicated page table pool.

As a possible implementation, as shown in FIG. 8A, an access permission in the page table A1 (a page table under the second privilege) includes the read and write permissions. That is, under the second privilege, the page table A1 (an example of the first page table) includes the write permission. This means that, subsequently, a write operation may be performed on the memory in the dedicated page table pool, so that, subsequently, when a valid page table modification command is detected, the page table in the dedicated page table pool is modified under the second privilege, to implement or repair a system function.

As a possible implementation, as shown in FIG. 8A, under the second privilege, the access permission of the page table A1 of the dedicated page table pool includes the read permission. In this way, in some cases, a modification of the dedicated page table pool may be completed under the second privilege.

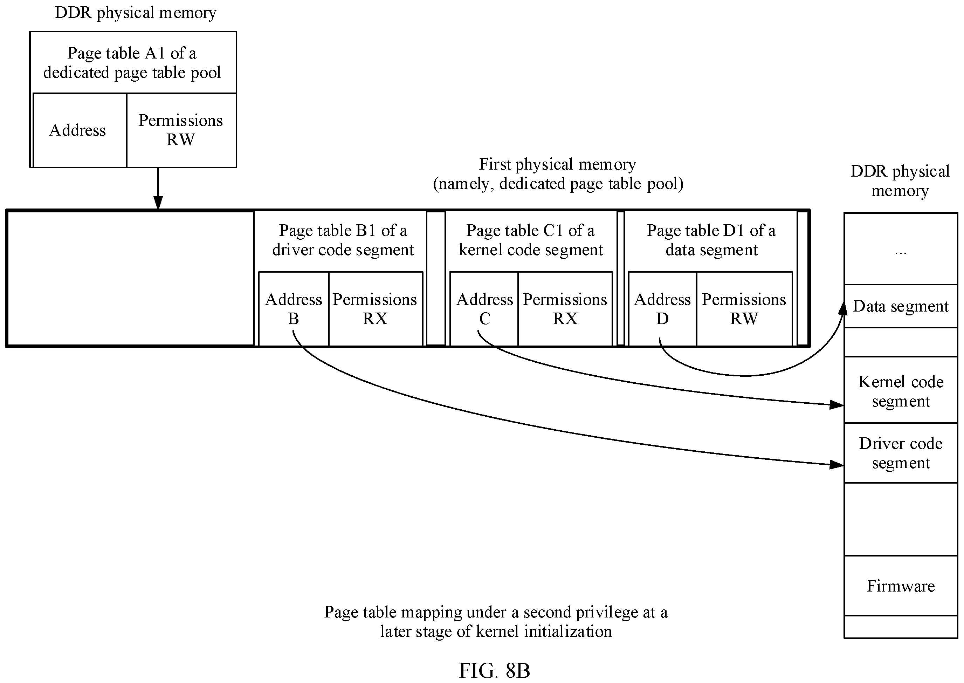

Optionally, to reduce a system risk, at the later stage of the kernel initialization, the control module may remove the write permission of the code segment, to obtain a page table B1 and a page table C1 shown in FIG. 8B. Optionally, to reduce a system risk, at the later stage of the kernel initialization, the control module may remove the execute permission of the data segment, to obtain a page table D1 shown in FIG. 8B.

Embodiments of this application further provide a kernel protection method. The method is applicable to a kernel running process. The following describes the kernel protection method in the kernel running process in different scenarios.

### Scenario 1: Page table modification scenario

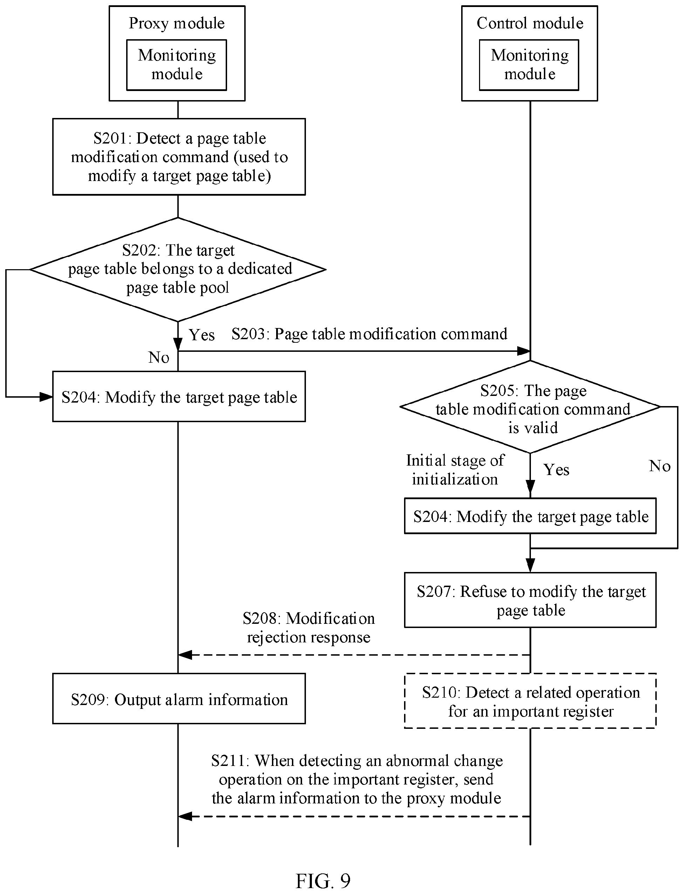

During a kernel running process, a kernel may detect a page table modification operation, and the page table modification operation may be from an attacker or an authorized user. For example, the attacker modifies a page table to tamper with kernel code, or the authorized user modifies the page table to load some functional modules (such as a ko driver module). To prevent the attacker from attacking a system by modifying the page table, this embodiment of this application provides a kernel protection method. When a page table modification operation under a first privilege is detected, whether the page table modification operation is valid needs to be determined, and a corresponding page table is modified only when determining that the page table modification operation is valid. Specifically, as shown in FIG. 9, the kernel protection method includes the following steps:

S201: A proxy module detects a page table modification command.

The proxy module runs under the first privilege. The page table modification command is used to indicate to modify a target page table (or referred to as a to-be-modified page table). The modifying a target page table includes but is not limited to modifying access permission data corresponding to target memory in the target page table. For example, as shown in FIG. 8B, the proxy module detects a page table modification command for modifying a page table B1. The page table modification command indicates to add a write permission to the page table B1.

S202: The proxy module determines whether the target page table (the to-be-modified page table) corresponding to the target memory belongs to a dedicated page table pool; and if the target page table belongs to the dedicated page table pool, performs the following step S203; or if the target page table does not belong to the dedicated page table pool, performs the following step S204.

As a possible implementation, the proxy module determines a storage address of the target page table; and if the storage address of the target page table is within an address range of the dedicated page table pool, determines that the target page table belongs to the dedicated page table pool; otherwise, determines that the target page table is not in the dedicated page table pool.

S203: The proxy module sends the page table modification command to a control module.

Optionally, the page table modification command carries address information of physical memory whose access permission is to be modified.

It has been pointed out above that the proxy module running under the first privilege (for example, a kernel privilege) cannot directly modify an important page table, and an operation of modifying the important page table is completed by the control module running under a second privilege. Specifically, as a possible implementation, in a kernel running process, when a page table modification is performed, the proxy module determines whether the to-be-modified page table is in the dedicated page table pool. In some cases, if the to-be-modified page table belongs to the dedicated page table pool, it means that the to-be-modified page table is an important page table (which has large impact on kernel security). In this case, to ensure the kernel security, the proxy module delivers the page table modification command to the control module running under the second privilege, and the control module with a higher privilege determines whether to modify a corresponding important page table.

For example, as shown in FIG. 8B, the proxy module detects the page table modification command for the page table B1, and determines that the page table B1 is stored in the dedicated page table pool (which belongs to the important page table). In this case, to improve the kernel security, the proxy module forwards the page table modification command to the control module, and the control module determines whether the page table modification command is valid.

S204: The proxy module modifies the target page table.

In some other cases, in the kernel running process, after the proxy module detects the page table modification command, if the proxy module determines that the to-be-modified page table does not belong to the dedicated page table pool, it means that the to-be-modified page table is not the important page table; and even if the to-be-modified page table is modified, a system is usually not damaged. In this case, the proxy module may directly modify the to-be-modified page table based on implementation logic in the conventional technology. For example, the proxy module modifies the access permission data in the target page table.

S205: The control module determines whether the page table modification command is valid; and if the page table modification command is valid, performs the following step S206; or if the page table modification command is invalid, performs the following step S207.

S206: The control module modifies the target page table based on the page table modification command.

In some cases, after the control module receives the page table modification command from the proxy module, if the control module determines that the page table modification command is a valid command, it means that a command for modifying the important page table is usually an operation from an authorized user, and usually does not cause an attack risk to the system. In this case, the control module modifies the target page table based on the page table modification command, to implement a corresponding function of the system.

For example, in a scenario in which a hot patch needs to be loaded for a kernel to repair a system function, after receiving the page table modification command from the proxy module, the control module determines that the command is a valid command (for example, an insn command) for loading the hot patch to kernel code, and then the control module may directly modify, based on the command, content in a physical address in which a kernel code segment is located, for example, directly modify a hot patching hook in the kernel code segment.

In a validity assessment part, considering that insn can only be invoked by the kernel, and is difficult to be maliciously invoked, a high permission is granted to the insn command. After determining that the insn command is detected, the control module may directly modify content in corresponding physical memory without first modifying a corresponding page table.

Optionally, the control module returns a response to modifying the target page table to the proxy module.

S207: The control module rejects to modify the target page table.

In some cases, after the control module receives the page table modification command from the proxy module, if the control module determines that the page table modification command is not a valid command, it means that the command for modifying the important page table is usually an operation from an unauthorized user, and the control module rejects to modify the target page table.

S208: The control module sends a modification rejection response to the proxy module.

Optionally, if determining to reject to modify a corresponding important page table, the control module may send the modification rejection response to the proxy module.

The following describes specific implementations of the control module determining whether the page table modification command is valid.

As a possible implementation, validity of the kernel code segment may be ensured by a secure boot process. This means that the kernel code segment has high validity, and correspondingly a command from the kernel code segment is considered as a valid command. Optionally, all sub-modules in the control module determine an address of a command delivered by the proxy module; and if the command does not belong to the kernel code segment, reject the command, to avoid an attack of a command from a non-kernel code segment.

That is, in this embodiment of this application, only a command from the kernel code segment is considered as a valid command. Another command from the non-kernel code segment is considered as an invalid command even if the command passes ko signature verification in secure boot.

As a possible implementation, after the control module receives the page table modification command from the proxy module, if an address mapped to the to-be-modified page table is within an address range corresponding to the kernel code segment, it indicates that the to-be-modified page table is a page table used for mapping the kernel code segment. In this case, to prevent the unauthorized user from tampering with the kernel code by tampering with the page table, the control module determines that the page table modification command is a valid command only when the page table modification command is a preset command. That is, an access permission of the kernel code segment can be modified only by using the preset command.

Optionally, the preset command includes but is not limited to insn. The preset command may further include a command used to modify a page table attribute of the kernel code segment. The insn command is not used to modify the page table attribute of the kernel code segment in the dedicated page table pool, and may be directly used to modify content in the kernel code segment by using the second permission. In this case, modified content of the kernel code segment is small, and is usually few bytes.

In some examples, the insn command is used to load the hot patch. Subsequently, a new command may be used to modify the page table of the kernel code segment. This is not limited in this embodiment of this application.

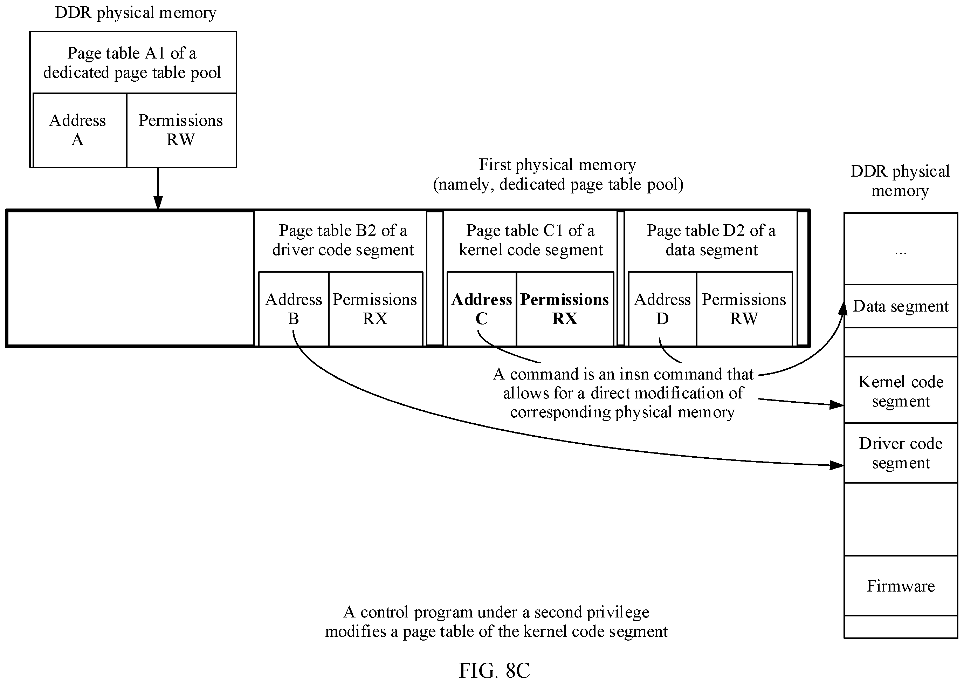

For example, the control module receives the insn command from the proxy module. The command indicates that a page table C1 shown in FIG. 8C needs to be modified, to add a write permission to physical memory (memory in which the kernel code segment is located) of an address C. If the insn command is from the kernel code segment and is a preset command, the control module determines that the insn command is valid, and may directly modify the content of the kernel code segment without additionally modifying the page table C1.

For another example, the control module receives the page table modification command from the proxy module. The command indicates that a page table C1 shown in FIG. 8B needs to be modified, to add a write permission to physical memory (memory in which the kernel code segment is located) of an address C. If the page table modification command is a command other than the insn command, the control module considers the page table modification command as an invalid command, and rejects to modify the page table C1, to avoid a system attack caused by modifying the page table C1.

As a possible implementation, based on the page table modification command received from the proxy module, if a memory address to which the to-be-modified page table is mapped is the dedicated page table pool, a control program determines that the page table modification command is an invalid command, and correspondingly the page table is not allowed to be modified. For example, the control module receives the page table modification command from the proxy module. The command indicates that an access permission of physical memory corresponding to an address A shown in FIG. 8A needs to be modified. Because the physical memory corresponding to the address A is physical memory in which the dedicated page table pool is located, the control module considers the page table modification command as an invalid command, and does not execute the page table modification command.

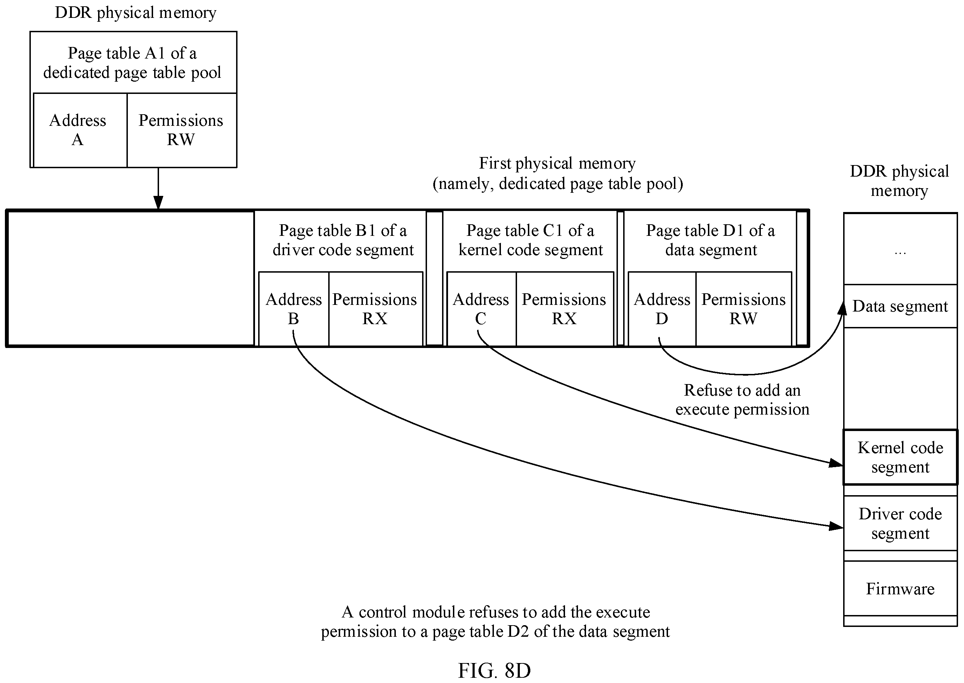

As a possible implementation, if, based on the page table modification command, the address to which the to-be-modified page table is mapped is within an address range of a data segment, it indicates that the to-be-modified page table is a page table used for mapping the data segment. In this case, to avoid data segment injection and execution and another similar attack, the control module does not allow the data segment to have both write and execute permissions. That is, provided that a page table modification command that can enable the data segment to have both the write and execute permissions is detected, the control module considers the page table modification command as an invalid command. For example, in some scenarios, the control module receives the page table modification command from the proxy module. The page table modification command indicates the control module to add the execute permission to a page table D1 shown in FIG. 8D, that is, indicates to add the execute permission to physical memory (memory in which the data segment is located) corresponding to an address D. The control module rejects to add the execute permission to access permission data in the page table D1, to prevent the data segment from having both the write and execute permissions, to reduce a risk of a data segment injection and execution attack on the system.

As a possible implementation, if, based on the page table modification command, the physical address to which the to-be-modified page table is mapped belongs to an address range of a driver code segment, the control module determines whether to enable a monitoring function currently. If the control module currently enables the monitoring function, the control module performs validity assessment, that is, needs to determine whether the page table modification command can enable the driver code segment to have both the write and execute permissions. If the page table modification command can enable the driver code segment to have both the write and execute permissions, the control module considers the page table modification command as an invalid command, and does not respond to the page table modification command. If the page table modification command does not enable the driver code segment to have both the write and execute permissions, the control module considers the page table modification command as a valid command.

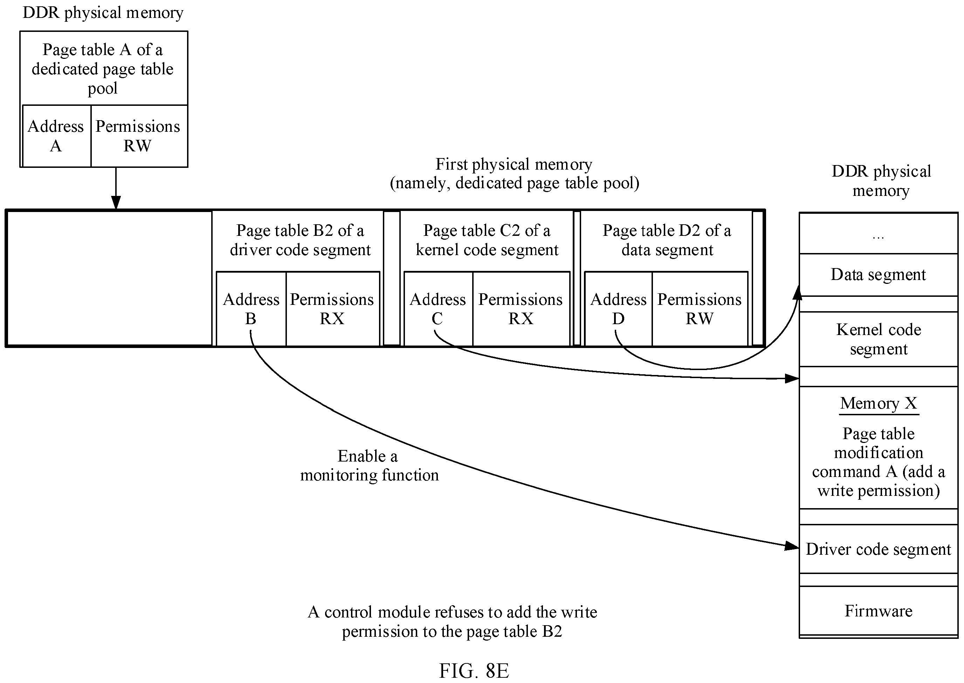

For example, as shown in FIG. 8E, the control module receives the page table modification command from the proxy module. The page table modification command indicates to add the write (W) permission to memory of an address B (namely, memory in which the driver code segment is located), that is, the write permission needs to be added to a page table B2. If the control module enables the monitoring function in this case, the control module performs validity assessment on the page table modification command. After determining, a page table modification operation of adding the write permission to the page table B2 causes the driver code segment to have both the write and execute permissions, which increases a risk of an injection and execution attack. Therefore, the control module rejects to add the write permission to access permission data in the page table B2.

On the contrary, if the control module does not enable the monitoring function currently, the control module does not perform validity assessment, that is, does not determine whether the page table modification command is valid, but directly considers the page table modification command from the proxy module as a valid command; and performs an operation indicated by the page table modification command to modify the target page table.

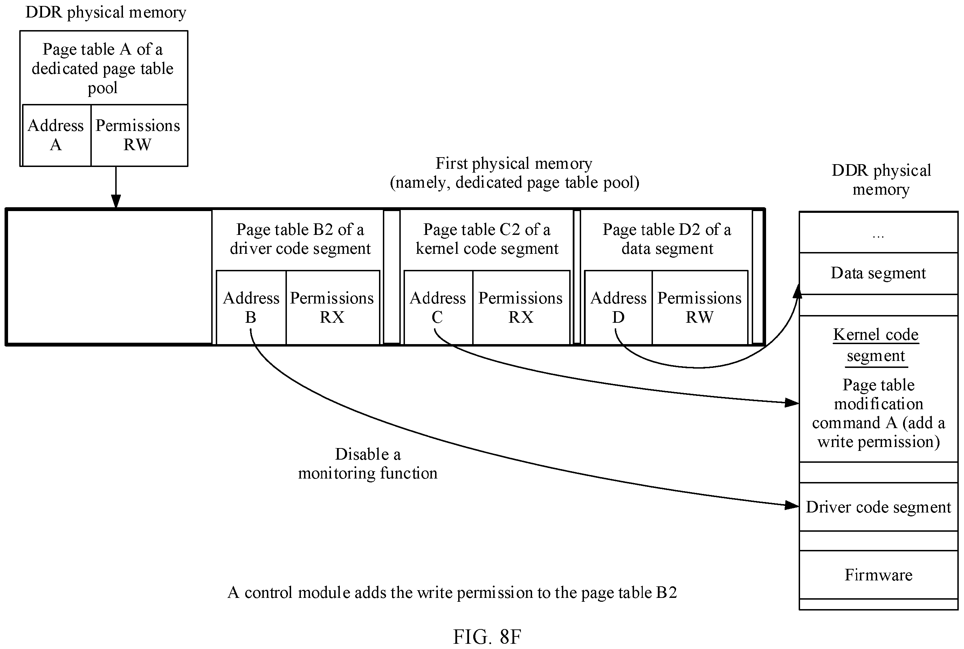

For example, as shown in FIG. 8F, the control module receives a page table modification command A from the proxy module. The page table modification command A indicates to add the write (W) permission to the memory of the address B (namely, the memory in which the driver code segment is located), that is, the write permission needs to be added to the page table B2. If the control module does not enable the monitoring function (where the monitoring function is disabled) in this case, the control module does not perform validity assessment on the page table modification command A, but directly adds the write permission to the page table B2 based on the page table modification command A.

During ko insertion or hot patch loading, a control sub-module of the proxy module informs a switch sub-module of the proxy module to deliver a monitoring function disabling command to the switch sub-module of the control module. After a ko insertion procedure ends, the control sub-module of the proxy module informs the switch sub-module of the proxy module to deliver a monitoring function enabling command to the switch sub-module of the control module.

The switch sub-module of the control module may determine whether an address in which the monitoring function disabling command that is delivered by the switch sub-module of the proxy module is located belongs to the kernel code segment, to determine whether the monitoring function needs to be disabled. If the monitoring function disabling command is located in a kernel code segment area, it means that the monitoring function disabling command is valid, that is, is secure. In this case, the control module may temporarily disable the monitoring function. In this way, after the monitoring function is disabled, a corresponding page table may be modified based on the page table modification command, to have a corresponding access permission for accessing corresponding memory, and support a normal system function (for example, support loading a ko module in the driver code segment).

For example, as shown in FIG. 8F, the control module receives the page table modification command A from the proxy module, and the page table modification command A is stored in the kernel code segment. The control module determines that the page table modification command A is not delivered by a malicious program based on a storage address of the page table modification command A. In this case, the switch sub-module of the control module may inform a monitoring sub-module to disable the monitoring function, so that the page table B2 can be modified, to support the normal system function (for example, loading the ko module by modifying the page table B2).

On the contrary, if the monitoring disabling command does not belong to the kernel code segment, validity of the page table modification command cannot be ensured. In this case, the monitoring function is not disabled, that is, the monitoring function continues to be maintained. For example, as shown in FIG. 8E, the control module receives the page table modification command A from the proxy module, and the page table modification command A is stored in memory X outside the kernel code segment. Because the page table modification command A is from outside the kernel code segment, whether the page table modification command A is secure cannot be directly ensured. Therefore, the control module keeps enabling the monitoring function, and continues to detect validity of the page table modification command A. For example, as shown in FIG. 8E, for the page table modification command A for which the write permission is to be added to the page table B2, if the control module determines that the page table modification command A can enable the driver code segment to have both the write and execute permissions, the control module does not respond to the page table modification command A, that is, rejects to modify the page table B2, to reduce the risk of the injection and execution attack on the system.

The switch sub-module of the control module may determine whether an address in which the monitoring enabling command (monitoring function enabling command) that is delivered by the switch sub-module of the proxy module is located belongs to the kernel code segment, to determine whether the monitoring function needs to be enabled.

S209: The proxy module outputs alarm information.

Optionally, after receiving the modification rejection response from the control module, the proxy module may output the alarm information to notify a user that an unauthorized kernel intrusion operation may exist currently, and the user may detect and check the system based on the alarm information. Alternatively, if the proxy module does not receive a confirm message (used to confirm a modification on a corresponding important page table) from the control module within a period of time, the proxy module may output the alarm information.

As a possible implementation, a log dedicated to recording the alarm information exists in the kernel, and the proxy module records the alarm information in the log.

S210: The control module detects a related operation for an important register.

Optionally, the important register includes but is not limited to a page table base address register, a system control register, and the like.

The related operation for the important register includes but is not limited to an abnormal change operation on the important register.

As a possible implementation, at a stage of kernel initialization, an initialization sub-module stores a value of the register and a hash value calculated by the kernel code segment as reference values for subsequent measurement comparison.

S211: When detecting the abnormal change operation on the important register, the control module sends the alarm information to the proxy module.

Optionally, in the kernel running process, for a monitoring blind area of a page table mechanism, for example, some important registers, the control module may perform periodic measurement or measurement in response to a specific event. When detecting that the important register is abnormally changed, the control module sends the alarm information to the proxy module. The proxy module may display the alarm information through a display driver, to notify the user that the current system may have a risk.

Optionally, a specific value of a measurement periodicity may be adjusted based on an actual situation, or the measurement periodicity may be determined based on a switching frequency between two privileges of a CPU. A specific setting manner and the specific value of the measurement periodicity in this embodiment of this application are not limited.

In some other embodiments, the control module may further perform the periodic measurement or the measurement in response to the event on the dedicated page table pool, the kernel code segment, the driver code segment, the data segment, and the like, and perform a corresponding operation.

### Scenario 2: Page table creation scenario

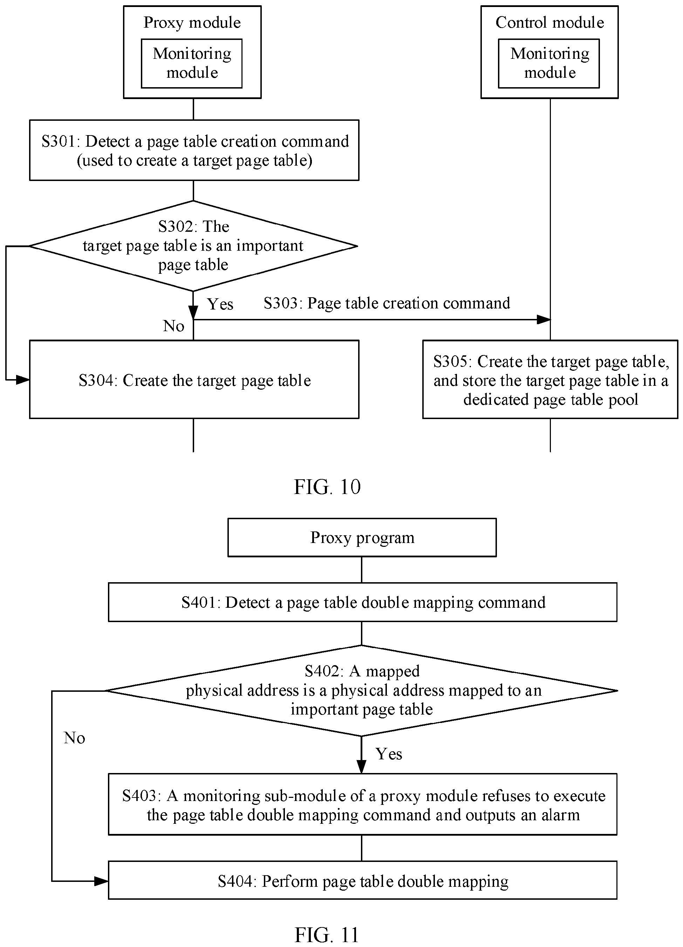

During a kernel running process, a system sometimes creates a new page table based on a requirement. In this embodiment of this application, when it is detected that the new page table needs to be created to allocate large memory, whether a to-be-created target page table belongs to an important page table is determined. If the to-be-created target page table belongs to the important page table, and is usually a high-level page table, a control module creates the target page table, and adds the target page table to a dedicated page table pool, so that important page tables are subsequently managed together. On the contrary, if the to-be-created target page table does not belong to the important page table, the target page table is created in a kernel based on the conventional technology. Specifically, as shown in FIG. 10, the method may include:
S301: A proxy module detects a page table creation command.

The page table creation command is used to create the target page table.

S302: The proxy module determines whether the target page table belongs to the important page table. If the target page table belongs to the important page table, the following step S303 is performed. If the target page table does not belong to the important page table, step S304 is performed.

S303: The proxy module sends the page table creation command to a control module.

S304: The proxy module creates the target page table.

S305: The control module creates the target page table based on the page table creation command, and stores the target page table in the dedicated page table pool.

### Scenario 3: Page table double-mapping scenario

As shown in FIG. 11, the method may include:
S401: A proxy module detects a page table double-mapping command.

The page table double-mapping command is used to double-map a target page table.

S402: The proxy module determines whether a mapped physical address belongs to a physical address to which an important page table is mapped. If the mapped physical address belongs to the physical address, the following step S403 is performed. If the mapped physical address does not belong to the physical address, step S404 is performed.

S403: A monitoring sub-module of the proxy module rejects to execute the double-mapping command and outputs an alarm.

S404: Perform double-mapping based on open-source logic.

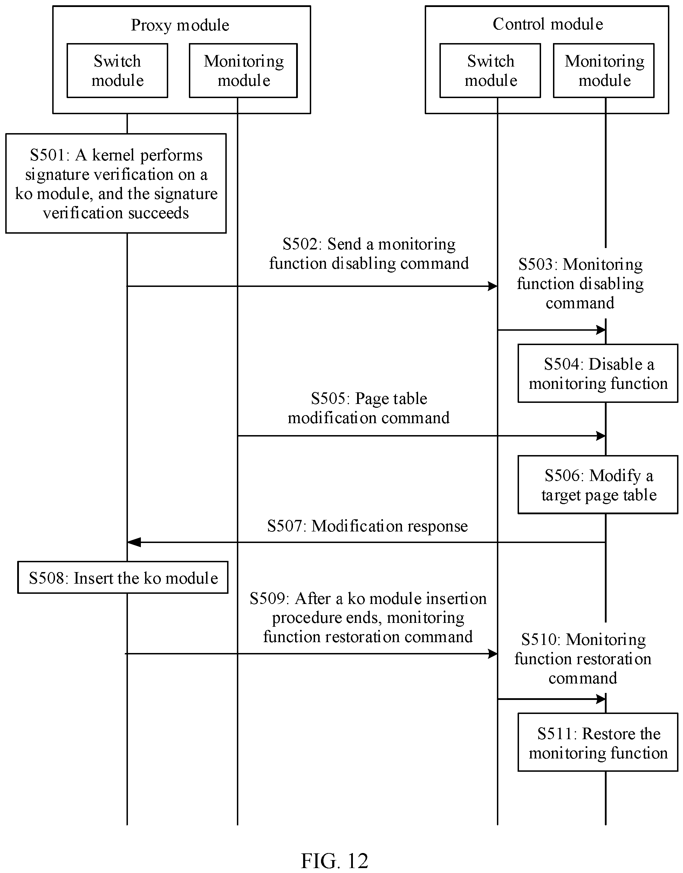

The foregoing describes working principles of a switch sub-module. The following describes, with reference to an example, a procedure of implementing driver code segment protection through cooperation between the switch sub-module and the monitoring sub-module. As shown in FIG. 12, the method includes:
S501: A kernel performs signature verification on a ko module, and the verification succeeds.

The signature verification is completed by secure boot, and a switch sub-module of a proxy module is triggered to perform S502.

For example, in a secure boot enabling process, the signature verification is performed on the ko module. If the verification succeeds, the ko module continues to be loaded, and the switch sub-module is triggered to work. If the verification fails, a ko module loading procedure is terminated, and the switch sub-module is not triggered to work. If the secure boot is disabled, a signature of the ko module is not verified. Ko is directly loaded, and the switch sub-module is triggered. Therefore, security of a function of the switch sub-module is ensured by the secure boot.

S502: The switch sub-module of the proxy module sends a monitoring function disabling command to a switch sub-module of a control module.

S503: The switch sub-module of the control module sends the monitoring function disabling command to a monitoring sub-module, to disable a detection function.

S504: In response to the monitoring function disabling command, the monitoring sub-module of the control module disables the monitoring function.

For example, the switch sub-module informs the monitoring sub-module to disable validity assessment on a driver code segment area.

S505: A monitoring sub-module of the proxy module sends a page table modification command to the monitoring sub-module of the control module.

It may be understood that, after determining security of the ko module, the switch sub-module of the proxy module indicates the monitoring sub-module to send the page table modification command to the monitoring sub-module of the control module.

S506: The monitoring sub-module of the control module modifies a target page table.

As a possible implementation, if the monitoring sub-module of the control module receives the page table modification command from the monitoring sub-module of the proxy module, and a current monitoring function is disabled, the monitoring sub-module no longer further assesses validity of the page table modification command, but directly modifies a corresponding page table based on the page table modification command.

S507: The monitoring sub-module of the control module sends a modification response to the switch sub-module of the proxy module, to indicate that a modification of the target page table is completed.

S508: Insert the ko module into the switch sub-module of the proxy module.

S509: After a ko module insertion procedure ends, the switch sub-module of the proxy module sends a monitoring function restoration command to the switch sub-module of the control module.

S510: The switch sub-module of the control module sends the monitoring function restoration command to the monitoring sub-module of the control module, to restore the monitoring function.

S511: In response to the monitoring function restoration command, the monitoring sub-module of the control module restores the monitoring function.

In embodiments of this application, for a definition of an important page table, refer to descriptions in definitions of key terms. A range of the important page table may be flexibly controlled during specific implementation of the solution of this patent. For example, only tampering of a kernel code segment is monitored, or only a high-level page table is monitored for a data segment page table.

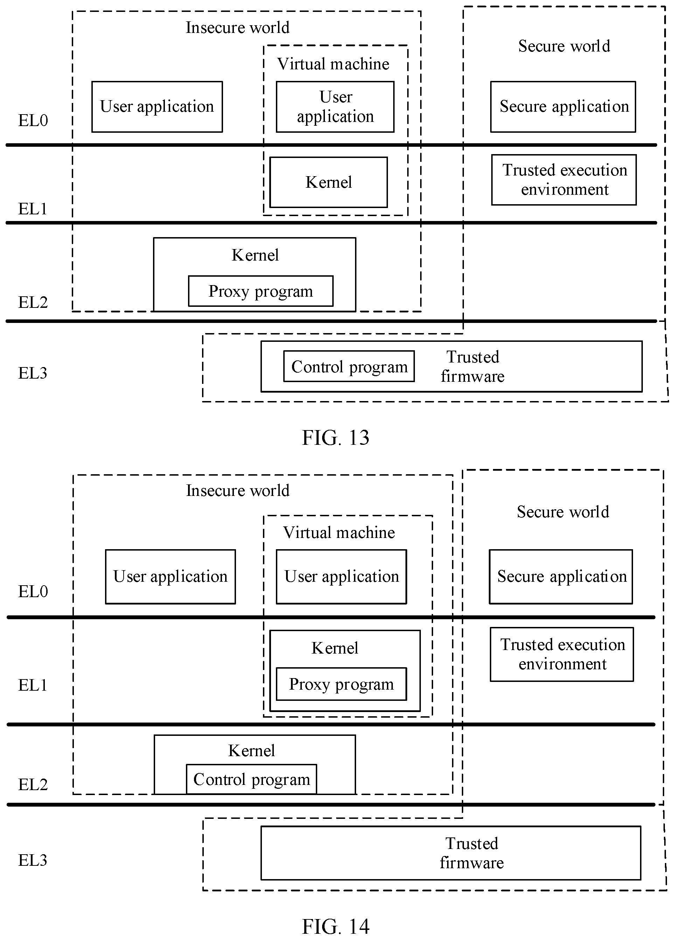

FIG. 13 shows an implementation example on an arm architecture in this patent. A segment of memory is divided and is set to a secure world. Even a kernel cannot access the segment of memory. The access to the segment of memory needs to be performed after a privilege escalation, that is, after an access permission of the secure world is obtained.

A proxy program is run in the kernel (kernel), and the kernel runs on a CPU permission at an EL2 level.

A control program is run in an arm trusted firmware (arm trusted firmware, ATF) module (a part of BIOS firmware (software fixed on a mainboard (but is closer to hardware and is different from kernel software code))) responsible for switching between the secure world and an insecure world, and ATF runs on a CPU permission at an EL3 level.

This architecture solution is applicable to running on a host (HostOS) running a cloud virtual machine (GuestOS), and running of a virtual machine is not affected. In the solution of this patent, integrity of host kernel memory can be protected, to prevent an attacker from intruding a host kernel through the virtual machine, and obtaining important data in another virtual machine.

FIG. 14 shows an implementation example on an arm architecture (from top to bottom) in this patent.

A proxy program is run in a VM kernel (kernel) of a virtual machine operating system (GuestOS), and the VM kernel runs on a CPU permission at an EL1 level.

A control program is run in a kernel (kernel) of a host operating system (HostOS).

The architecture solution is applicable to being deployed in a virtual machine. A host kernel is used to ensure integrity of the VM kernel. An attacker is prevented from intruding the VM kernel, and intruding a host or performing another attack.

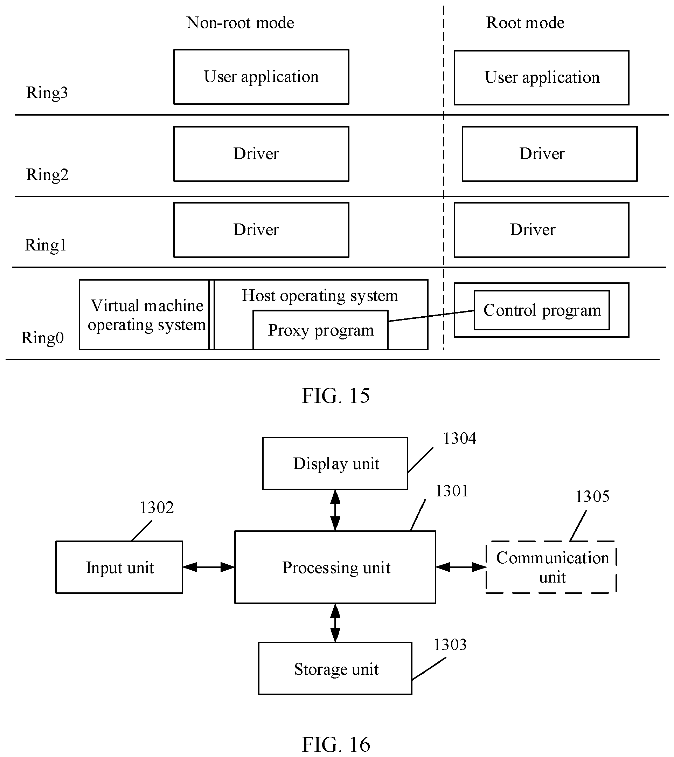

FIG. 15 shows an implementation example on an x86_64 architecture in this patent.

A host (HostOS) kernel running in the x86_64 architecture with a ring0 privilege in a root mode may be moved to run with a ring0 privilege in a non-root mode. In the root and non-root modes, there are four permissions. The root mode controls the non-root mode.

A proxy program is run in a kernel (kernel) of a host operating system (HostOS) and is located in the non-root mode of the ring0.

A control program is run in the root mode of the ring 0.

This architecture solution is deployed on a host to ensure integrity of the host kernel (kernel). The solution is applicable to a scenario in which no virtual machine runs.

In the solution, a virtual machine can still run. However, the virtual machine may be nested. Some chips may cause a performance loss based on different specific chip implementations.

According to the technical solution in this embodiment of this application, a permission of a critical memory in the kernel cannot be directly modified under a kernel privilege, and a modification needs to be completed after validity is accessed by a program with a higher privilege. Based on the technical solution in this embodiment of this application, a dedicated page table pool (rop-pool) may be allocated, page table self-mapping may be established, and then a kernel page table and the like are stored in the dedicated page table pool, to manage important page tables together. A high permission is used to remove a write permission of a self-mapping page table in the rop-pool, to implement a difficult problem that a kernel cannot completely remove a write permission of a page table when a mapping loop exists in the page table.

According to the technical solution in this embodiment of this application, after obtaining a root permission, an attacker cannot bypass an existing software protection mechanism, that is, cannot modify content in a kernel code segment image, and cannot execute code that is injected into a data segment. A modification to a system register is detected and an alarm is generated. In the solution of this patent, most kernel memory vulnerability attacks such as ret2usr, ret2dir, KSMA, a kernel code injection, and the like can be defended against. Attack types that cannot be prevented in the solution of this patent are mainly ROP/JOP attacks. In the solution of this patent, periodic measurement may be performed on important data such as DMA page table mapping data, to implement a function that "an open-source page table permission technology cannot defend against an attack that is not intruded through a CPU side". This patent proposes an active real-time defense solution. In a normal running process of a system, it is almost impossible to be trapped in a high permission to modify a page table permission, and the like. Therefore, in this patent, when the system is running, a range of an important page table, a measurement periodicity, and measurement content may be controlled, to implement a quite small performance loss.

Some other embodiments of this application provide an apparatus. The apparatus may be the foregoing electronic device (for example, a foldable screen mobile phone). The apparatus may include a memory and one or more processors. The memory is coupled to the processor. The memory is configured to store computer program code, and the computer program code includes computer instructions. When the processor executes the computer instructions, the electronic device may perform functions or steps performed by the electronic device in the foregoing method embodiments. For a structure of the electronic device, refer to the electronic device shown in FIG. 4.

A core structure of the electronic device may be represented as a structure shown in FIG. 16. The core structure may include a processing unit 1301, an input unit 1302, a storage unit 1303, and a display unit 1304.

The processing unit 1301 may include at least one of a central processing unit (CPU), an application processor (Application Processor, AP), or a communication processor (Communication Processor, CP). The processing unit 1301 may perform an operation or data processing related to control and/or communication of at least one of other elements of a user electronic device. Specifically, the processing unit 1301 may be configured to: control, based on a specific trigger condition, content displayed on a main screen; or determine, according to a preset rule, the content displayed on a screen. The processing unit 1301 is further configured to: process input instructions or data, and determine a display style based on processed data.

The input unit 1302 is configured to: obtain instructions or data input by a user, and transmit the obtained instructions or data to another module of the electronic device. Specifically, an input manner of the input unit 1302 may include touch, a gesture, proximity to a screen, and the like, or may be a voice input. For example, the input unit may be a screen of the electronic device, and may obtain an input operation of the user, generate an input signal based on the obtained input operation, and transmit the input signal to the processing unit 1301.

The storage unit 1303 may include a volatile memory and/or a non-volatile memory. The storage unit is configured to store at least one related instruction or data in another module of a user terminal device. Specifically, the storage unit may record a page table.

The display unit 1304 may include, for example, a liquid crystal display (LCD), a light emitting diode (LED) display, an organic light emitting diode (OLED) display, a micro-electro-mechanical system (MEMS) display, or an electronic paper display. The display unit 1304 is configured to display content (for example, a text, an image, a video, an icon, a symbol, and the like) that can be viewed by the user.

Optionally, the structure shown in FIG. 16 may further include a communication unit 1305, configured to support the electronic device in communicating with another electronic device. For example, the communication unit may be connected to a network through wireless communication or wired communication, to communicate with another personal terminal or a network server. The wireless communication may use at least one of cellular communication protocols, for example, long term evolution (LTE), long term evolution advanced (LTE-A), code division multiple access (CDMA), wideband code division multiple access (WCDMA), universal mobile telecommunication system (UMTS), wireless broadband (WiBro), or a global system for mobile communication (GSM). The wireless communication may include, for example, short-range communication. The short-range communication may include at least one of wireless fidelity (Wi-Fi), Bluetooth, near field communication (NFC), magnetic stripe transmission (MST), or GNSS.

It should be noted that descriptions of steps in the method embodiments of this application may be referenced to modules corresponding to the apparatus. Details are not described herein again.

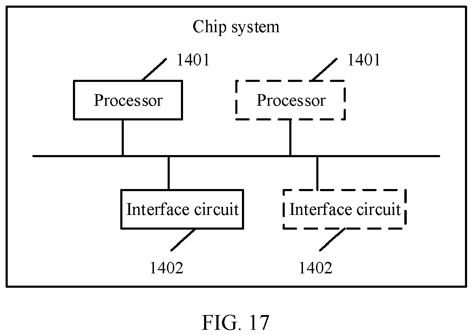

An embodiment of this application further provides a chip system. As shown in FIG. 17, the chip system includes at least one processor 1401 and at least one interface circuit 1402. The processor 1401 and the interface circuit 1402 may be interconnected through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in a memory, and send the instructions to the processor 1401. When the instructions are executed by the processor 1401, the electronic device is enabled to perform the steps in the foregoing embodiments. Certainly, the chip system may further include another discrete device. This is not specifically limited in this embodiment of this application.

An embodiment of this application further provides a computer storage medium. The computer storage medium includes computer instructions. When the computer instructions are run on the foregoing electronic device, the electronic device is enabled to perform the functions or steps performed by the electronic device in the foregoing method embodiments.

An embodiment of this application further provides a computer program product. When the computer program product runs on a computer, the computer is enabled to perform the functions or steps performed by the electronic device in the foregoing method embodiments.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or the units is merely logical function division and may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

A unit described as a separate component may or may not be physically separate, and a component displayed as a unit may be one or more physical units, that is, may be located in one place, or may be distributed to different places. Some or all of the units may be selected based on an actual requirement to achieve the objectives of the solutions of embodiments.

In addition, functional units in embodiments of this application may be integrated into one processing unit. Each of the units may also exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read only memory, ROM), a random access memory (random access memory, RAM), a magnetic disk, or an optical disc.

The foregoing content is merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A kernel protection method, applied to an electronic device, wherein the method comprises:
working in a first privilege, and detecting a page table modification command, wherein the first privilege comprises a kernel privilege, the page table modification command is used to modify access permission data in a target page table, the target page table is a kernel-related page table, and the first privilege is the kernel privilege;
switching from the first privilege to a second privilege, and determining, under the second privilege, whether to modify the target page table based on the page table modification command, wherein a permission of the second privilege is higher than that of the first privilege; and
modifying the access permission data in the target page table if determining to modify the target page table.

2. The method according to claim 1, wherein the kernel-related page table comprises any one or more of the following page tables: a page table used for mapping a kernel code segment, a page table used for mapping a driver code segment, and a page table used for mapping a data segment; and
the determining whether to modify the target page table based on the page table modification command comprises:
if the target page table is the page table used for mapping the kernel code segment, and the page table modification command is a preset command, determining to modify the target page table.

3. The method according to claim 1 or 2, wherein the method further comprises: creating first physical memory, a first page table, and a second page table under the first privilege, wherein
the first page table and the second page table are stored in the first physical memory, the first page table is a page table used for mapping the first physical memory, and the second page table is a kernel-related page table.

4. The method according to claim 3, wherein an access permission of the first physical memory is read-only under the first privilege.

5. The method according to claim 3, wherein the first page table does not comprise a write permission under the first privilege, and the first page table comprises the write permission under the second privilege.

6. The method according to claim 2, wherein the preset command comprises an insn command.

7. A kernel protection apparatus, comprising:
a processing unit, configured to work in a first privilege and detect a page table modification command, wherein the first privilege comprises the first privilege, the page table modification command is used to modify access permission data in a target page table, the target page table is a kernel-related page table, and the first privilege is a kernel privilege; switch from the first privilege to a second privilege, and determine, under the second privilege, whether to modify the target page table based on the page table modification command, wherein a permission of the second privilege is higher than that of the first privilege; and modify the access permission data in the target page table if determining to modify the target page table.

8. The apparatus according to claim 7, wherein the kernel-related page table comprises any one or more of the following page tables: a page table used for mapping a kernel code segment, a page table used for mapping a driver code segment, and a page table used for mapping a data segment; and
the determining whether to modify the target page table based on the page table modification command comprises:
if the target page table is the page table used for mapping the kernel code segment, and the page table modification command is a preset command, determining to modify the target page table.

9. The apparatus according to claim 7 or 8, wherein the processing unit is further configured to create first physical memory, a first page table, and a second page table under the first privilege, wherein
the first page table and the second page table are stored in the first physical memory, the first page table is a page table used for mapping the first physical memory, and the second page table is a kernel-related page table.

10. The apparatus according to claim 9, wherein an access permission of the first physical memory is read-only under the first privilege.

11. The apparatus according to claim 9, wherein the first page table does not comprise a write permission under the first privilege, and the first page table comprises the write permission under the second privilege.

12. The apparatus according to claim 8, wherein the preset command comprises an insn command.

13. An electronic device, comprising:
one or more processors;
a memory; and
one or more computer programs, wherein the one or more computer programs are stored in the memory; and when the computer program is executed by the one or more processors, the electronic device is enabled to perform the method according to any one of claims 1 to 6.

14. A computer-readable storage medium, wherein the computer-readable storage medium comprises a computer program or instructions; and when the computer program or the instructions are run on a computer, the computer is enabled to perform the method according to any one of claims 1 to 6.

15. A computer program product, wherein the computer program product comprises a computer program or instructions; and when the computer program or the instructions are run on a computer, the computer is enabled to perform the method according to any one of claims 1 to 6.
